# EUROPÄISCHE PATENTSCHRIFT

(11) **EP 3 105 276 B1**
(45) Veröffentlichungstag und Bekanntmachung des Hinweises auf die Patenterteilung: **31.01.2018**
(21) Anmeldenummer: 15703790.4
(22) Anmeldetag: 12.02.2015
(51) Int. Cl.: C08G 59/50, C08G 59/66, C08K 5/3445, C08K 5/3462, C08K 5/37, G02C 1/00

(54) **AMINKATALYSIERTE THIOLHÄRTUNG VON EPOXIDHARZEN**
AMINE-CATALYZED THIOL-CURING OF EPOXIDE RESINS
DURCISSEMENT DE RÉSINES ÉPOXYDES AU MOYEN DE THIOLS AVEC CATALYSE PAR UNE AMINE

(30) Priorität: 13.02.2014 DE 102014202609
(43) Veröffentlichungstag der Anmeldung: 21.12.2016
(73) Patentinhaber: Carl Zeiss Smart Optics GmbH, 73430 Aalen (DE)
(72) Erfinder: WEIPPERT, Hans-Joachim, 73431 Aalen (DE)
(74) Vertreter: Patentanwälte Geyer, Fehners & Partner mbB
(86) Internationale Anmeldenummer: PCT/EP2015/052948
(87) Internationale Veröffentlichungsnummer: WO 2015/121341

(56) Entgegenhaltungen:
- DATABASE WPI Week 200953 Thomson Scientific, London, GB; AN 2009-M21250 XP002738216, & JP 2009 173744 A (SHINETSU CHEM IND CO LTD) 6. August 2009 (2009-08-06)

## Beschreibung

Die Erfindung bezieht sich auf eine Zusammensetzung auf der Basis von Epoxidharzen und Thiolen, die aminkatalysiert polymerisiert werden kann und deren Verwendung als Einbettmedium für die Mikroskopie, als Klebstoff und als Feinkitt sowie auf ein Optikelement, das die Zusammensetzung enthält.

Bei Klebstoffen, insbesondere Konstruktionsklebstoffen, die in der Feinmechanik und Optik eingesetzt werden, besteht zunehmend Bedarf an kurzen Aushärtezeiten. Reaktionskleber mit kurzen Aushärtezeiten haben üblicherweise auch kurze Verarbeitungszeiten. Aus technologischer Sicht sind jedoch häufig ausreichend lange Verarbeitungszeiten erforderlich, beispielsweise um die zu verklebenden Werkstücke genau auszurichten. Als handelsübliche Kleber, die bei Raumtemperatur aushärten, sind Polyurethanklebstoffe und amingehärtete Epoxidharze bekannt. Bei einer Verarbeitungszeit von ca. einer Stunde liegt dabei die Aushärtezeit bei Raumtemperatur bis zum Erreichen der Endfestigkeit im Bereich von etwa ein bis zwei Tagen.

Eine Verkürzung der Aushärtezeit kann durch den Einsatz lichthärtender Klebstoffe erreicht werden, vorausgesetzt die Fügeflächen sind ausreichend lichtdurchlässig und es gibt keine Schattenzonen. Bei großen Klebeflächen ist es erforderlich, eine homogene Ausleuchtung zu realisieren, damit der Klebstoff gleichmäßig und spannungsarm aushärten kann. Als Alternative sind zudem Hybridsysteme oder dualhärtende Klebstoffe bekannt, die zusätzlich zur UV-Härtung in einer Dunkelhärtung durch Feuchtigkeit oder durch Wärme härten können. Die im Rahmen der vorliegenden Erfindung durchgeführten Untersuchungen an im Handel erhältlichen dualhärtenden Konstruktionsklebstoffen haben gezeigt, dass sich jedoch das durch die Dunkelhärtung entstandene Polymer signifikant von dem Polymer unterscheidet, das durch UV-Polymerisation entstanden ist. Die Gebrauchseigenschaften untersuchter ausgehärteter Kleber waren durchweg nicht zufriedenstellend. Weiterhin sind die für eine Dunkelreaktion erforderlichen Voraussetzungen ungünstig für Klebungen von feinmechanischen und optischen Geräten, da die erforderliche Luftfeuchte von mindestens 50% relative Luftfeuchtigkeit in Reinräumen oft unterschritten wird und Optikgehäuse zudem häufig mit Stickstoff zur Trocknung gespült werden.

Für thermische Nachhärtereaktionen sind häufig Temperaturen von 80°C und mehr erforderlich, was zu Verspannungen bzw. teilweise zu Schäden an Baugruppen führen kann. Bei anaerob erfolgenden Dunkelhärtungen tritt das Problem auf, dass bei feinmechanisch-optischen Geräten oft nicht die dafür geeigneten Materialien vorliegen und spezielle Primer als Aktivatoren vor dem Klebeprozess aufgetragen werden müssen.

Bei handelsüblichen Schnellklebern auf der Basis von Epoxiden wird trotz Verarbeitungszeiten von oft nur wenigen Minuten die Endfestigkeiten erst nach ca. 5-20 Stunden (bei Raumtemperaturhärtung) erreicht. Bei solch kurzen Verarbeitungszeiten besteht zudem das Problem, dass die Benetzung der Klebeflächen schnell unzureichend wird, wodurch sich die Klebefestigkeit signifikant verschlechtert, insbesondere nach Belastung durch feuchte Wärme.

Zur mikroskopischen Untersuchung von Proben, beispielsweise Gewebeschnitten, ist es üblich, die Proben in ein transparentes Medium einzubetten. Das Einbettmedium schafft die optischen Voraussetzungen für die mikroskopische Untersuchung, schützt die Probe vor mechanischen Beschädigungen und dient der dauerhaften Haltbarmachung der Probe. Für eine hohe Bildqualität sind die optischen Eigenschaften des Einbettmediums von entscheidender Bedeutung, insbesondere eine an die eingesetzte Mikroskopietechnik und die Art des zu untersuchenden Präparats anpaßbare Brechzahl und Dispersion sowie eine hohe Transmission und geringe Restfluoreszenz des Einbettmediums. Die Brechzahl des Einbettmediums sollte möglichst an die Brechzahl des Glases von verwendetem Objektträger und Deckglas oder, im Fall der Immersionsmikroskopie, an die Brechzahl des Immersionsmediums anpaßbar sein, um eine möglichst geringe sphärische Aberration zu erreichen. Bei solchen Einbettmedien ist ebenfalls eine kurze Aushärtzeit bei ausreichend langer Verarbeitungszeit, eine Aushärtung bei Raumtemperatur zum Schutz der einzubettenden biologischen Proben und eine gute Haftung an den eingebetteten Proben wünschenswert. Bei bestimmten Präparaten kann es aber auch erforderlich sein, dass das (ausgehärtete) Einbettmedium eine möglichst hohe Brechzahl hat, wodurch sich dann hohe Abbildungsqualitäten bei der mikroskopischen Betrachtung ergeben.

Ferner kann es bei bestimmten optischen Anwendungen erforderlich sein, dass der Brechwert eines verwendeten Klebstoffs im ausgehärteten Zustand an den Brechwert der eingesetzten Optikkomponenten anzupassen ist. Klebstoffe für Optikkomponenten werden auch als Feinkitte bezeichnet. Beispielsweise kann bei Prismengruppen, die als Strahlteiler eingesetzt werden, der durch die Kittschicht beim Verkitten von zwei Prismen sich zwangsläufig ergebende Keilfehler durch die Anpassung des Brechwerts eliminiert werden. Dadurch ist es möglich, die Abbildungsqualität der Prismengruppe erheblich zu verbessern.

Die DE 1 1770 258 A1 beschreibt harzartige Produkte und ein Verfahren zu deren Herstellung und betrifft die Reaktion von Epoxidharzen mit Polythiolen in Anwesenheit von 1,4-Diazabicyclo-[2.2.2]-octan.

In der WPI, Thomson Scientific, London, GB, AN 2009-M21250 ist eine Zusammensetzung beschrieben, umfassend ein Epoxidharz, ein Härtungsmittel und einen anorganischen Füllstoff und eine Verbindung, die eine 3-Mercaptopropionyloxygruppe enthält.

Aufgabe der Erfindung ist es daher, eine Zusammensetzung bereitzustellen, die die genannten Nachteile des Standes der Technik überwindet und bei ausreichend langen Verarbeitungszeiten eine kurze Aushärtezeit aufweist, bei Raumtemperatur härtbar ist, eine gute Haftfestigkeit zur Verfügung stellt und hervorragend als Klebstoff, Feinkitt und Einbettmedium für die Mikroskopie einsetzbar ist.

Erfindungsgemäß wird diese Aufgabe gelöst durch eine Zusammensetzung gemäß Anspruch 1.

Die Aufgabe wird weiter gelöst durch die Verwendung dieser Zusammensetzung als Klebstoff, insbesondere als Feinkitt und als Einbettmedium für die Mikroskopie. Die Aufgabe wird auch gelöst durch ein Optikelement, bei dem Teile durch die erfindungsgemäße Zusammensetzung miteinander verklebt sind.

Überraschenderweise bietet die erfindungsgemäße Zusammensetzung eine kurze Aushärtezeit bei gleichzeitig ausreichend langer Verarbeitungszeit, wobei eine vollständige Durchhärtung bereits bei Raumtemperatur erfolgt und die Zusammensetzung weist hervorragende Haftfestigkeiten auf. Damit eignet sich die erfindungsgemäße Zusammensetzung insbesondere als Klebstoff. Zudem ist mit der erfindungsgemäßen Zusammensetzung überraschenderweise eine sehr gute Einbettung mikroskopisch zu untersuchender Proben, insbesondere biologischer Proben möglich, es wird eine hervorragende Bildqualität bei der mikroskopischen Untersuchung dieser Proben erreicht und die erfindungsgemäße Zusammensetzung ist sehr gut als Feinkitt einsetzbar.

Das entwickelte Polymersystem basiert auf dem Prinzip der basenkatalysierten Ringöffnung von Epoxiden mit Mercaptanen. Dabei werden Epoxide, auch als Epoxidharze bezeichnet, mit Thiolen als Härterkomponente polymerisiert. Epoxidharze lassen sich mit Mercaptanen in der Regel erst ab Temperaturen von etwa 80°C härten. Gibt man jedoch Amine als basische Katalysatoren hinzu, ist ein Aushärten bereits bei Raumtemperatur möglich.

Die Verwendung von Aminen und Mercaptanen als Vernetzer zur Härtung von Epoxiden ist bekannt. Dabei übernimmt die Mercaptankomponente die Aufgabe eines mitvernetzenden Flexibilisators. Es gibt Klebstoffsysteme mit drei Komponenten, bestehend aus Epoxidharzen, Mercaptanflexibilisatoren und Aminhärter. Die drei Komponenten müssen separat gelagert werden, da Mischungen aus primären Aminen und aus Mercaptanen nicht lagerstabil sind. Als gängige Mercaptanflexibilisatoren werden Polysulfide, auch Thioplaste genannt, in Klebstoff-Formulierungen verwendet.

Das entwickelte Polymersystem verzichtet hingegen auf die bei Epoxidharzklebstoffen üblichen primären Aminen als Härterkomponente. Die Härtung der Epoxide erfolgt ausschließlich mit mehrfach funktionellen Mercaptanen, wobei die tertiären Amine als Katalysatoren fungieren. Mischungen von Mercaptanen mit tertiären Aminen in katalytischer Menge sind bei Raumtemperatur ausreichend lagerstabil, wie eigene Untersuchungen ergeben haben. Somit ist es möglich, Zweikomponenten-Klebstoffe zu formulieren, bei denen die Härterkomponente ein Polythiol ist, mit einem tertiären Amin als Katalysator.

Eine zentrale Rolle kommt in der erfindungsgemäßen Zusammensetzung der Komponente (C) zu, dem tertiären Amin, das einen aliphatischen Stickstoff-Heterocyclus auf Basis eines 5- oder 6-gliedrigen Rings aufweist, d.h. den Pyrrolidin- oder Piperidinderivaten, insbesondere N-Alkylpyrrolidin- oder N-Alkylpiperidinderivaten, das in katalytischen Mengen in der erfindungsgemäßen Zusammensetzung enthalten ist. Dieses cycloaliphatische tertiäre Amin weist eine ausreichend hohe Basizität und Nukleophilie auf, um die Ringöffnung der Epoxide mit den Mercaptanen zu katalysieren, es geht aber keine unerwünschten Nebenreaktion ein, zum Beispiel mit dem Epoxid. Darüber hinaus weist die erfindungsgemäße Zusammensetzung weniger als 1 Gew.-% primäres Amin auf, vorzugsweise weniger als 0,1 Gew.-%, um solche Nebenreaktionen, insbesondere mit den Epoxiden zu vermeiden. Überraschenderweise lässt sich mit den eingesetzten tertiären Aminen auf Basis eines 5- oder 6-gliedrigen aliphatischen Stickstoff-Heterocyclus in Kombination mit den verwendeten Thiolestern, die aufgrund der Estergruppierung eine ausreichende Reaktivität der SH-Gruppe aufweisen, das gewünschte Eigenschaftsprofil im Sinne einer ausreichend langen Verarbeitungszeit und einer kurzen Abbindezeit der Zusammensetzung bei der Polymerisation erreichen.

Bei der eingesetzten Epoxidverbindung, dem Thiolester (Mercaptanester) und dem tertiären Amin handelt es sich jeweils um organische Verbindungen, d.h. es werden eine organische Epoxidverbindung, ein organischer Thiolester und ein organisches tertiäres Amin eingesetzt.

Unter einer organischen Verbindung wird im Sinne der Erfindung, wie im Stand der Technik üblich, eine Kohlenstoff enthaltende chemische Verbindung verstanden.

Unter "enthaltend eine Verbindung" wie z.B. eine Epoxidverbindung, ein Thiolester oder ein tertiäres Amin wird wie üblich verstanden, dass die Zusammensetzung ein oder mehrere dieser Verbindungen enthalten oder umfassen kann. In diesem Sinne betrifft die Erfindung eine Zusammensetzung umfassend ein oder mehrere Epoxidverbindungen mit jeweils zwei oder mehr Epoxidgruppen, ein oder mehrere Thiolester mit jeweils zwei oder mehr Estergruppen und zwei oder mehr Thiolgruppen und/oder eine oder mehrere Thioether mit jeweils zwei oder mehr Thiolgruppen und 0,005 - 2 Gew.-%, bezogen auf das Gesamtgewicht der Zusammensetzung, eines oder mehrerer tertiärer Amine, das einen 5- oder 6-gliedrigen aliphatischen Stickstoff-Heterocyclus aufweist, wobei die Zusammensetzung weniger als 1 Gew.-%, bezogen auf das Gesamtgewicht der Zusammensetzung, primäres Amin enthält.

Unter einer aliphatischen Verbindung wird, wie ebenfalls im Stand der Technik üblich, eine organische chemische Verbindung verstanden, die nicht aromatisch ist. Die aliphatische Verbindung kann gesättigt oder ungesättigt sein. Epoxide, Thiolester, Thioether und Amine sind dem Fachmann bekannt, ebenso wie Isocyanate und Thiourethane. Ein Thiolester ist in diesem Sinne eine Verbindung, die eine Thiolgruppe (-SH) und eine Estergruppierung (-COOR) enthält, ein Thioether enthält die Gruppierung RSR' (R und R'= Alkyl oder Aryl) und ein Thiourethan enthält die Gruppe RSC(NH)OR', wie es im Falle einer präpolymeren/oligomeren Vorstufe eingesetzt wird.

Unter einem Polymer wird im Sinne der Erfindung eine organische Verbindung verstanden, die aus sich wiederholenden Einheiten von Monomeren aufgebaut ist.

Eine photolatente Base ist im Sinne der Erfindung eine photolatente Basenverbindung gemäß Patentanspruch 1 der EP 2 145 231 B1. Der Inhalt der EP 2 145 231 B1 wird hiermit durch Inbezugnahme in die vorliegende Anmeldung aufgenommen. Der Patentanspruch 1 der EP 2 145 231 B1 ist nachfolgend wiedergegeben:

Photolatente Basenverbindung der Formel (I), (II) oder (III) 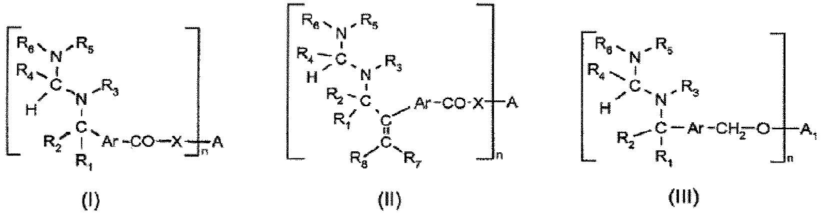 worin
**Ar** für Phenylen, Biphenylen, Napthylen, Anthrylen oder Anthrachinonylen steht, wobei alle diese Reste unsubstituiert oder ein- oder mehrfach durch C₁-C₄-Alkyl, C₂-C₄-Alkenyl, CN, OR₁₁, SR₁₁, CH₂OR₁₁, COOR₁₂, CONR₁₂R₁₃ oder Halogen substituiert sind;
**R₁, R₂, R₇** und **R₈** unabhängig voneinander für Wasserstoff oder C₁-C₆-Alkyl stehen;
**R₃** und **R₅** zusammen eine C₂-C₆-Alkylenbrücke bilden, die unsubstituiert oder ein- oder mehrfach durch C₁-C₄-Alkyl substituiert ist;
**R₄** und **R₆** zusammen eine C₂-C₆-Alkylenbrücke bilden, die unsubstituiert oder ein- oder mehrfach durch C₁-C₄-Alkyl substituiert ist;
**R₁₁** für Wasserstoff, C₁-C₆-Alkyl oder Phenyl steht;
**R₁₂** und **R₁₃** unabhängig voneinander für Wasserstoff, Phenyl, C₁-C₁₈-Alkyl, C₁-C₁₈-Alkyl, das ein- oder mehrfach durch O unterbrochen ist, stehen oder
R₁₂ und R₁₃ für 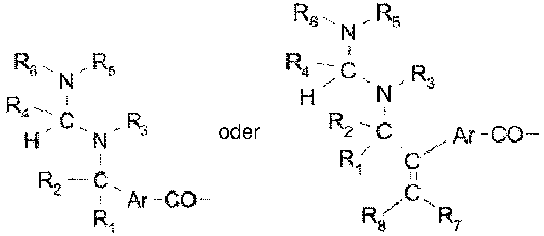 stehen;
**n** für 1 - 10 steht;
**X** für eine direkte Bindung, O, S oder NR₁₀ steht;
**A** dann, wenn n für 1 steht, für ununterbrochenes C₁-C₁₈-Alkyl oder ein- oder mehrfach durch O oder N(R'₁₃) unterbrochenes C₁-C₁₈-Alkyl steht, wobei das ununterbrochene oder unterbrochene C₁-C₁₈-Alkyl unsubstituiert oder ein- oder mehrfach durch C₁-C₁₈-Alkyl, C₁-C₆-Hydroxyalkyl, CN, OR₁₁, SR₁₁, NR₁₂R₁₃, COOR₁₂, OCOR₁₄ oder Halogen substituiert ist; oder A für C₂-C₁₈-Alkenyl oder ein- oder mehrfach durch O unterbrochenes C₃-C₁₈-Alkenyl steht, wobei das C₂-C₁₈-Alkenyl oder unterbrochene C₃-C₁₈-Alkenyl unsubstituiert oder ein- oder mehrfach durch C₁-C₈-Alkyl, C₁-C₆-Hydroxyalkyl, CN, OR₁₁, SR₁₁, NR₁₂R₁₃, COOR₁₂, Halogen oder C₇-C₁₅-Aralkyl substituiert ist; oder
A dann, wenn n für 1 steht, für eine Gruppe 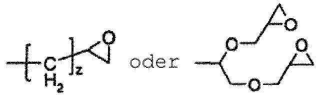
steht; oder
A dann, wenn n für 1 steht, für eine Gruppe 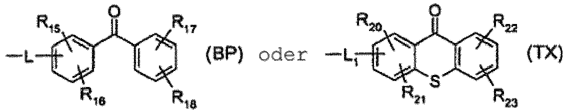 steht
oder dann, wenn X für 0 steht, **X-A** zusätzlich für X⁻Y⁺ steht;
**A** dann, wenn n größer als 1 ist,
für einen n-wertigen gesättigten oder ungesättigten C₂-C₅₀-Kohlenwasserstoffrest steht, der gegebenenfalls ein- oder mehrfach durch O, S, N(R'₁₃), Phenylen, Naphthylen, 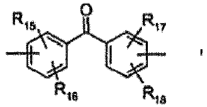 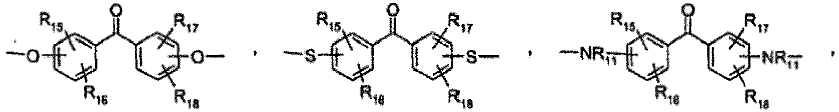 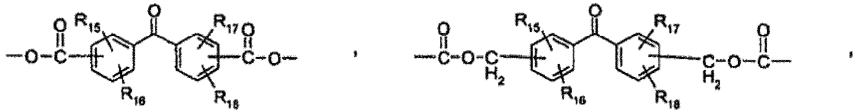 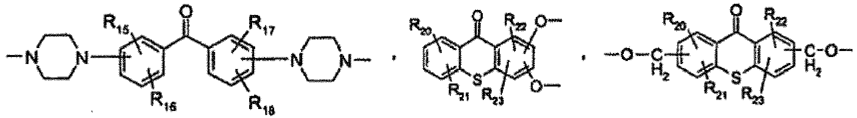 oder

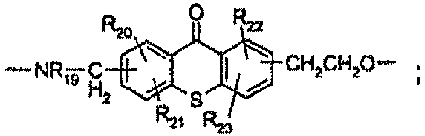

unterbrochen ist, wobei der ununterbrochene oder unterbrochene n-wertige gesättigte oder ungesättigte C₂-C₅₀-Kohlenwasserstoffrest unsubstituiert oder ein- oder mehrfach durch C₁-C₈-Alkyl, C₁-C₆-Hydroxyalkyl, CN, OR₁₁, SR₁₁, NR₁₂R₁₃, COOR₁₂ oder Halogen substituiert ist; oder **A** dann, wenn X für NR₁₀ steht, für ein n-wertiges Polyalkylenimin steht; wobei das n-wertige Polyalkylenimin ununterbrochen oder ein- oder mehrfach durch (CO), (CO)O oder Doppelbindungen unterbrochen ist und das ununterbrochene oder unterbrochene n-wertige Polyalkylenimin unsubstituiert oder durch 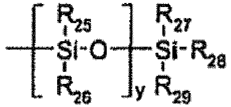
substituiert ist: oder dann, wenn X für O steht, zusätzlich ein oder mehrere **X-A** für X⁻ₙ, Yⁿ⁺ oder X⁻ₙ nY⁺ stehen;
**y** für eine ganze Zahl von 1 - 20 steht;
**z** für eine ganze Zahl von 1 - 8 steht;
**R'₁₃** eine der für R₁₂ und R₁₃ angegebenen Bedeutungen besitzt oder für eine Gruppe (TX) steht;
**R₁₀** eine der für A, wenn n für 1 steht, angegebenen Bedeutungen besitzt;
**A₁** dann, wenn n für 1 steht, für Wasserstoff, C₁-C₁₈-Alkanoyl, C₂-C₁₈-Alkanoyl, das ein- oder mehrfach durch 0 und/oder CO unterbrochen ist, wobei das ununterbrochene oder unterbrochene C₂-C₁₈-Alkanoyl unsubstituiert oder ein- oder mehrfach durch C₁-C₄-Alkyl, C₂-C₄-Alkenyl, Phenyl, CN, OR₁₁, SR₁₁, NR₁₂R₁₃, COOR₁₂ oder Halogen substituiert ist; oder das ununterbrochene oder unterbrochene C₂-C₁₈-Alkanoyl durch C₆-C₁₀-Aryl, das unsubstituiert oder ein- oder mehrfach durch C₁-C₄-Alkyl, C2-C4-Alkenyl, CN, OR₁₁, SR₁₁, NR₁₂R₁₃ oder Halogen substituiert ist, substituiert ist, steht;
oder A₁ für C₃-C₁₈-Alkenoyl, das unsubstituiert oder ein- oder mehrfach durch C₁-C₄-Alkyl, C₂-C4-Alkenyl, CN, OR₁₁, SR₁₁, NR₁₂R₁₃, COOR₁₂, Halogen oder C₆-C₁₀-Aryl, das unsubstituiert oder ein- oder mehrfach durch C₁-C₄-Alkyl, C₂-C₄-Alkenyl, CN, OR₁₁, SR₁₁, NR₁₂R₁₃ oder Halogen substituiert ist, substituiert ist;
C₂-C₁₈-Alkylaminocarbonyl, das unsubstituiert oder ein- oder mehrfach durch C₁-C₄-Alkyl, C₂-C₄-Alkenyl, CN, OR₁₁, SR₁₁, NR₁₂R₁₃, COOR₁₂ oder Halogen substituiert ist;
C₆-C₂₀-Arylaminocarbonyl, das unsubstituiert oder ein- oder mehrfach durch C₁-C₄-Alkyl, C₂-C₄-Alkenyl, OR₁₁, NR₁₂R₁₃ oder Halogen substituiert ist; C₇-C₂₀-Arylalkylaminocarbonyl, das unsubstituiert oder ein- oder mehrfach durch C₁-C₄-Alkyl, C₂-C₄-Alkenyl, OR₁₁, NR₁₂R₁₃ oder Halogen substituiert ist;
C₇-C₁₅-Aroyl oder C₅-C₁₅-Heteroaroyl, wobei diese beiden Gruppen unsubstituiert oder ein- oder mehrfach durch C₁-C₄-Alkyl, C₂-C₄-Alkenyl, CN, OR₁₁, SR₁₁, NR₁₂R₁₃ oder Halogen substituiert sind;
steht; oder
A₁ dann, wenn n für 1 steht, für eine Gruppe 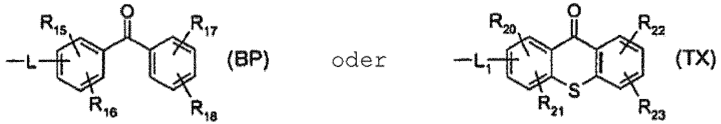 steht;
**A₁** dann, wenn n größer als 1 ist, für ein n-wertiges C₂-C₃₀-Alkanoyl, das gegebenenfalls ein- oder mehrfach durch O unterbrochen ist, wobei das ununterbrochene oder unterbrochene C₂-C₃₀-Alkanoyl unsubstituiert oder ein- oder mehrfach durch C₁-C₄-Alkyl, C₂-C₄-Alkenyl, CN, OR₁₁, SR₁₁, NR₁₂R₁₃, COOR₁₂, oder Halogen substituiert ist;
ein n-wertiges C₈-C₂₀-Aroyl oder C₆-C₂₀-Heteroaroyl, wobei diese beiden Gruppen unsubstituiert oder ein- oder mehrfach durch C₁-C₄-Alkyl, C₂-C₄-Alkenyl, CN, OR₁₁, SR₁₁, NR₁₂R₁₃, COOR₁₂ oder Halogen substituiert sind;
ein n-wertiges C₁₀-C₂₀-Aralkanoyl, das unsubstituiert oder ein- oder mehrfach durch C₁-C₄-Alkyl, C₂-C₄-Alkenyl, CN, OR₁₁, SR₁₁, NR₁₂R₁₃, COOR₁₂ oder Halogen substituiert ist; oder
ein n-wertiges C₁-C₃₀-Alkylaminocarbonyl, das unsubstituiert oder ein- oder mehrfach durch C₁-C₄-Alkyl, C₂-C₄-Alkenyl, CN, OR₁₁, SR₁₁, NR₁₂R₁₃, COOR₁₂ oder Halogen substituiert ist, wobei das unsubstituierte oder substituierte n-wertige C₁-C₃₀-Alkylaminocarbonyl gegebenenfalls aus mehreren einwertigen C₁-C₃₀-Alkylaminocarbonylgruppen, die über Dimere oder Trimere von Isocyanaten oder Derivaten davon verknüpft sind, besteht; oder
ein n-wertiges C₆-C₂₀-Arylaminocarbonyl, das unsubstituiert oder ein- oder mehrfach durch C₁-C₄-Alkyl, C₂-C₄-Alkenyl, CN, OR₁₁, SR₁₁, NR₁₂R₁₃, COOR₁₂ oder Halogen substituiert ist; steht; oder
A₁ dann, wenn n größer als 1 ist, für eine Gruppe 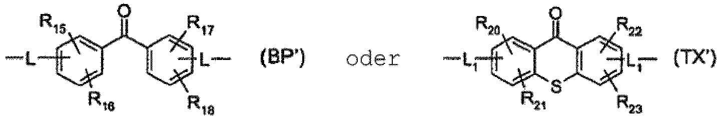 steht;
L für eine direkte Bindung; unsubstituiertes C₁-C₂₀-Alkylen, C₁-C₂₀-Alkylen, das durch Phenyl oder ein- oder mehrfach durch OH substituiert ist; C₁-C₂₀-Alkylen, das ein- oder mehrfach durch O, S, O(CO), (CO)O unterbrochen ist;
oder C₁-C₂₀-Alkylen-O-(CO), C₁-C₂₀-Alkylen-N(R₁₉)(CO), C₁-C₂₀-Alkylen-S, C₁-C₂₀-Alkylen-O, C₁-C₂₀-Alkylen-(NR₁₉) oder C₁-C₂₀-Alkylen-(CO)-N(R₁₉), wobei die Gruppen C₁-C₂₀-Alkylen-O(CO), C₁-C₂₀-Alkylen-N(R₁₉)(CO), C₁-C₂₀-Alkylen-S, C₁-C₂₀-Alkylen-O, C₁-C₂₀-Alkylen-(NR₁₉) und C₁-C₂₀-Alkylen-(CO)-N(R₁₉) über das Heteroatom N, S oder O oder über die CO-Gruppe an die Benzophenongruppe gebunden sein sollen; steht; oder
L für (CO)-Q steht;
**Q** für eine direkte Bindung, C₁-C₈-Alkylen oder C₁-C₈-Alkylen, das ein- oder mehrfach durch 0 unterbrochen ist, steht;
**L₁** für eine direkte Bindung, CO; unsubstituiertes C₁-C₂₀-Alkylen, C₁-C₂₀-Alkylen, das durch Phenyl oder ein- oder mehrfach durch OH substituiert ist; C₁-C₂₀-Alkylen, das ein- oder mehrfach durch 0, S oder NR₂₄ unterbrochen ist; C₁-C₂₀-Alkylen, das ein- oder mehrfach durch 0, S oder NR₂₄ unterbrochen ist und durch OH substituiert ist;
oder unsubstituiertes C₁-C₂₀-Alkylen-O-(CO) oder C₁-C₂₀-Alkylen-O-(CO), das durch OH substituiert ist, oder C₁-C₂₀-Alkylen-O-(CO), worin das Alkylen ein- oder mehrfach durch O unterbrochen ist; C₁-C₂₀-Alkylen-N(R₁₉)(CO), C₁-C₂₀-Alkylen-S, C₁-C₂₀-Alkylen-O, C₁-C₂₀-Alkylen(NR₁₉) oder C₁-C₂₀-Alkylen-(CO)-N(R₁₉), wobei die Gruppen C₁-C₂₀-Alkylen-O-(CO) oder C₁-C₂₀-Alkylen-O-(CO), das durch OH substituiert ist, oder C₁-C₂₀-Alkylen-O-(CO), worin das Alkylen ein- oder mehrfach durch O unterbrochen ist; C₁-C₂₀-Alkylen-N(R₁₉)(CO), C₁-C₂₀-Alkylen-S, C₁-C₂₀-Alkylen-O, C₁-C₂₀-Alkylen-(NR₁₉) oder C₁-C₂₀-Alkylen-(CO)-N(R₁₉) über das Heteroatom N, S oder 0 oder über die CO-Gruppe an die Thioxanthongruppe gebunden sein sollen; steht; oder
Li für (CO)-C₁-C₂₀-Alkylen-O steht, das über das 0-Atom an die Thioxanthongruppe gebunden sein soll; oder
Li für (CO)-Q steht;
**Y** für ein n-wertiges kationisches Gegenion steht;
**R₁₄** für -CH=CH₂ oder -C(CH₃)=CH₂ steht;
**R₁₅, R₁₆, R₁₇** und **R₁₈** unabhängig voneinander für Wasserstoff, Halogen, C₁-C₁₂-Alkyl, OR₁₁, SR₁₁, NR₁₂R₁₃, oder (CO)OR₁₁ stehen;
**R₁₉** für Wasserstoff oder C₁-C₆-Alkyl steht;
**R₂₀, R₂₁, R₂₂** und **R₂₃** unabhängig voneinander eine der für R₁₅, R₁₆, R₁₇ und R₁₈ angegebenen Bedeutungen besitzen;
**R₂₄** für Wasserstoff, C₁-C₁₀-Alkyl oder C₁-C₁₀-Alkyl, das durch OH substituiert ist, steht und
**R₂₅, R₂₆, R₂₇, R₂₈** und **R₂₉** unabhängig voneinander für C₁-C₄-Alkyl stehen.

Als Epoxide sind Diglycidether erfindungsgemäß bevorzugt, da in ihnen die Epoxidgruppe eine ausreichende Reaktivität und geringe sterische Hinderung für die Öffnung durch die Thiolester aufweist. Besonders bevorzugte Epoxide sind Bisphenol-A-diglycidether (Araldit F, Rütapox 0162), Bisphenol-F-diglycidether (Rütapox 0158), Nanopox F 440 (Bisphenol-A/F-diglycidether mit ca. 40% nanoskaliges SiO2), Harz Kleber 52A farblos (Bisphenol-A/F-diglycidether mit eingebundenem Butadien-Acrylnitril-Copolymer), Bisphenol-A-propoxylat-diglycidether, Bisphenol-A-ethoxylat-diglycidether, Bisphenol-(hydriert)-A-diglycidether (Epalloy 5000), Resorcinol-diglycidether, 1,4-Cyclohexandimethanol-diglycidether (Erisys GE-22), 1,4-Butandioldiglycidether, 1,6-Hexandioldiglycidether, Neopentylglycoldiglycidether, Dipropylenglycoldiglycidether, Polypropylenglycoldiglycidether, Trimethylolpropantriglycidether, Trimethylolethantriglycidether, Pentaerythrol-polyglycidether (IPOX CL-16) und 1,3-Xylylentetraglycidylamin (Erisys GA-240). Am meisten bevorzugt sind Bisphenol-A-diglycidether und Bisphenol-F-diglycidether.

Weiterhin kann es vorteilhaft sein, der Epoxykomponente (Epoxidverbindung) einen epoxidierten Phenolharz-Novolack (z.B. Epalloy 8330) zuzusetzen.

Als Thiolester sind Mercaptoacetate, 2-Mercaptopropionate und 3-Mercaptopropionate bevorzugt, da diese Verbindungen eine besonders geeignete Reaktivität in Kombination mit den erfindungsgemäßen tertiären aliphatischen Aminen aufweisen, so dass lange Verarbeitungszeiten und kurze Härtungsphasen ermöglicht werden. Weiter bevorzugt sind Thiolester mit 3 oder mehr Thiolgruppen und 3 oder mehr Estergruppen. Besonders bevorzugt sind Pentaerythrol-tetra-(3-mercaptopropionat) (PTMP), Trimethylolpropan-tri-(3-mercaptopropionat) (TPMP), Ethylenglycol-di-(3-mercaptopropionat) (GDMP), Pentaerythrol-tetra-(mercaptoacetat) (PTMA), Trimethylolpropan-tri-(mercaptoacetat) (TPMA), Ethylenglycol-di-(mercaptoacetat) (GDMA), Tris-[2-(3-mercaptopropionyloxy)-ethyl]-isocyanurat (TEMPIC) und Tris-[2-(2-mercaptopropionyloxy)-ethyl]-isocyanurat (TETLIC). Unter diesen hat sich Pentaerythrol-tetra-(3-mercaptopropionat) als besonders vorteilhaft erwiesen. Die Kombination aus Bisphenol-A-diglycidether und Pentaerythrol-tetra-(3-mercaptopropionat) sowie die Kombination aus Bisphenol-F-diglycidether und Pentaerythrol-tetra-(3-mercaptopropionat) sind besonders bevorzugt. Als Alternative zu den beschriebenen Polyestern können für bestimmte Anwendungen auch aliphatische bzw. cycloaliphatische Thiole mit Thioetherstrukturen verwendet werden, z.B. MR7 B (4-Mercaptomethyl-3,6-dithia-1,8-octandithiol) oder MR10 B (Hersteller: Mitsui Toatsu Chemicals). Diese Thioetherthiole eignen sich insbesondere für hochbrechende optische Klebstoffe und hochbrechende Einbettmedien für die Mikroskopie, Brechwerte ausgehärtet nₑ(20 °C) ≥ 1,60. Aliphatische Dimercaptanverbindungen wie z.B. Bis-(2-mercaptoethyl)ether oder Bis-(2-mercaptoethyl)sulfid können als Reaktivverdünner zugesetzt werden.

In der erfindungsgemäßen Zusammensetzung wird als Komponente (C) ein tertiäres Amin eingesetzt, das einen 5- oder 6-gliedrigen aliphatischen Stickstoff-Heterocyclus aufweist. Der aliphatische Stickstoff-Heterocclus ist vorzugsweise gesättigt. Bevorzugt sind gegebenenfalls substituiertes N-(C₁-C₄)-Alkylpyrrolidin, gegebenenfalls substituiertes N-(C₁-C₄)-Alkylpyrrolidon, N-(C₁-C₄)-Alkylpiperidin, N-(C₁-C₄)-Alkylpiperazin, gegebenenfalls substituiertes N, N-(C₁-C₄)-Dialkylpiperazin, gegebenenfalls substituiertes N-(C₁-C₄)-Alkylmorpholin, gegebenenfalls substituiertes 1,4-Diazabicyclo-[2.2.2]-octan (DABCO), gegebenenfalls substituiertes 1,5-Diazabicyclo-[4.3.0]-non-5-en (DBN) und gegebenenfalls substituiertes 1,8- Diazabicyclo-[5.4.0]-undec-7-en (DBU). (C₁-C₄)-Alkyl steht für eine aliphatische Gruppe mit 1 - 4 Kohlenstoffatomen, d.h. Methyl, Ethyl, Propyl, Isopropyl, n-Butyl, iso-Butyl, sec-Butyl und tert-Butyl. Vorzugsweise sind die Alkylgruppen unsubstituiert oder mit einer Hydroxygruppe substituiert.

Besonders bevorzugt sind als tertiäre Amine mit einem 5- oder 6-gliedrigen aliphatischen Stickstoff-Heterocyclus folgende Verbindungen: 1-(2-Hydroxyethyl)-pyrrolidin, 1-(2-Hydroxyethyl)-pyrrolidon, 1-(2-Hydroxyethyl)-piperidin, 1-Ethylpiperazin, 1-(2-Hydroxyethyl)-piperazin, 1,4-Bis-(2-hydroxyethyl)-piperazin, 4-(2-Hydroxyethyl)-morpholin, 1,4-Diazabicyclo-[2.2.2]-octan (DABCO), 1,5- Diazabicyclo-[4.3.0]-non-5-en (DBN) und 1,8- Diazabicyclo-[5.4.0]-undec-7-en (DBU).

Die Umsetzungsgeschwindigkeit zwischen Epoxidverbindung und Thiolester in der erfindungsgemäßen Zusammensetzung und damit die Verarbeitungszeit und Aushärtungszeit werden von der Basizität und der Konzentration des zugesetzten tertiären Amins gesteuert. Für eine ausreichende Verarbeitungszeit einerseits und eine kurze Aushärtungszeit andererseits haben sich 0,005 - 2 Gew.-% des tertiären Amins mit dem 5- oder 6-gliedrigen aliphatischen Stickstoff-Heterocyclus als geeignet erwiesen. Bevorzugt sind 0,01 - 2 Gew.-%, insbesondere 0,02 - 1,5 Gew.-% des tertiären Amins. Bei weniger starken Basen ist dabei innerhalb dieses Bereichs eine eher höhere Menge vorteilhaft und bei den stärkeren Basen eine eher geringere Menge.

Die Basenstärke tertiärer Amine als Maß der katalytischen Wirksamkeit kann von der sterischen Verfügbarkeit des Elektronenpaars am Aminstickstoff überlagert werden. Die relative Reaktivität von tertiären Aminen, die für die aminkatalysierte Thiolhärtung von Epoxiden geeignet sind, wurde an einem Modellklebstoff, bestehend aus Araldit F und PTMP, untersucht. Dabei ergab sich:
a) Bei starken Aminbasen, Aminkonzentration im angemischten Klebstoff 0,2%

| | |
|---|---|
| DBN: | Reaktivität 1,0 |
| DBU: | Reaktivität 1,0 |
| DABCO: | Reaktivität 0,2 |

b) Amine mittlerer Basenstärke, Aminkonzentration im angemischten Klebstoff 2%

| | |
|---|---|
| 1-(2-Hydroxyethyl)pyrrolidin: | Reaktivität 1,0 |
| 1-Methylimidazol: | Reaktivität 0,24 |
| 1-Ethylpiperazin: | Reaktivität 0,20 |
| | |
| 4-(2-Hydroxyethyl)morpholin: | Reaktivität 0,04 |

Vor diesem Hintergrund ist es besonders bevorzugt 0,005 - 0,3 Gew.-%, bezogen auf das Gesamtgewicht der Zusammensetzung, insbesondere 0,01 - 0,2 Gew.-%, ein oder mehrere tertiäre Amine, ausgewählt aus der Gruppe bestehend aus 1,5- Diazabicyclo-[4.3.0]-non-5-en (DBN), 1,8- Diazabicyclo-[5.4.0]-undec-7-en (DBU) und 1,4-Diazabicyclo-[2.2.2]-octan (DABCO) einzusetzen oder 0,3 - 2 Gew.-%, bezogen auf das Gesamtgewicht der Zusammensetzung, insbesondere 0,5 - 1 Gew.-%, ein oder mehrere tertiäre Amine, ausgewählt aus der Gruppe bestehend aus 1-(2-Hydroxyethyl)-pyrrolidin, 1-(2-Hydroxyethyl)-pyrrolidon, 1-(2-Hydroxyethyl)-piperidin, 1-Ethylpiperazin, 1-(2-Hydroxyethyl)-piperazin, 1,4-Bis-(2-hydroxyethyl)-piperazin, und 4-(2-Hydroxyethyl)-morpholin einzusetzen.

Eine weitere erwünschte Eigenschaft von Klebstoffzusammensetzungen und Einbettmedien ist es, dass eine möglichst geringe Verspannung der ausgehärteten Zusammensetzung auftritt. Die erfindungsgemäßen Zusammensetzungen aus Epoxidverbindungen, Thiolester und dem wie oben beschriebenen cycloaliphatischen tertiären Amin lassen sich als besonders spannungsarme Formulierungen ausgestalten, da der Zusammensetzung schon vor der Polymerisierung ein Oligomer zugesetzt wird. Unter einem Oligomer wird im Sinne der Erfindung eine organische Verbindung verstanden, die aus sich wiederholenden Einheiten von Monomeren aufgebaut ist, wobei die Anzahl der Monomere (Summe aller Monomere) im Zahlenmittel 3 - 100 beträgt, vorzugsweise 5 - 80, insbesondere 3 - 45, weiter bevorzugt 5 - 25, besonders bevorzugt 7 - 15. Dieses Oligomer wird nachfolgend auch als Präpolymer bezeichnet. Es wird angenommen, dass das Vermindern von Verspannungen auf dem Umstand beruht, dass die zugesetzten Oligomere den Schrumpf beim Aushärten reduzieren. Bei rheologischen und thermoanalytischen Untersuchungen wurde festgestellt, dass die Oligomere den Vorteil haben, dass die Aushärtereaktion mit der Epoxykomponente im Vergleich zu monomeren Thiolen noch gleichmäßiger anspringt. Grund dafür dürfte die durch die präpolymere Struktur gegebene Reaktivitätsverteilung der einzelnen Thiolfunktionen sein.

Zudem lässt sich mit dem zusätzlichen Oligomer die Viskosität an den gewünschten Einsatzzweck anpassen. Bevorzugt ist es, dass die Zusammensetzung 10 - 50 Gew.-%, bezogen auf das Gesamtgewicht der Zusammensetzung, Oligomer enthält, insbesondere 20 - 40 Gew.-%, bezogen auf das Gesamtgewicht der Zusammensetzung. In einer bevorzugten Ausgestaltung der erfindungsgemäßen Zusammensetzung kann das Oligomer zusätzlich zu den oben beschriebenen Komponenten (A) bis (C) enthalten sein und es ist der Thiolester (B) ein Oligomer.

Das Oligomer, das nachfolgend auch als Präpolymer bezeichnet wird, ist ein oligomeres Thiourethan. Thiourethane sind dem Fachmann bekannt. Sie lassen sich aus einem Thiol und einem Isocyanat herstellen. Erfindungsgemäß sind oligomere Thiourethane erhältlich durch Umsetzung mindestens eines Thiolesters, der zwei oder mehr Estergruppen und zwei oder mehr Thiolgruppen aufweist und/oder, erhältlich durch Umsetzung mindestens eines Thioethers, der zwei oder mehr Thiolgruppen aufweist, mit mindestens einem Di- oder Polyisocyanat, wobei das oligomere Thiourethan zwei oder mehr freie Thiolgruppen aufweist. Die Anzahl der im Oligomer enthaltenen Thiol- und Isocyanatmonomeren ist in der Summe im Zahlenmittel vorzugsweise 3 - 100, weiter vorzugsweise 5 - 80, insbesondere 3 - 45, weiter bevorzugt 5 - 25 und besonders bevorzugt 7 - 15. In diesem Sinne würde das Oligomer PTMP - XDI - PTMP - XDI - PTMP 5 Monomere umfassen.

Vorzugsweise wird zur Herstellung des oligomeren Thiourethans der Thiolester gegenüber dem Isocyanat im Überschuss eingesetzt, um freie Thiolgruppen im oligomeren Thiourethan zu haben und um polymere Strukturen zu vermeiden. Das oligomere Thiourethan weist bevorzugt 4 oder mehr, insbesondere 6 oder mehr und besonders bevorzugt 8 oder mehr und weiter bevorzugt 10 oder mehr (freie) Thiolgruppen auf. Die Molmasse des Oligomers beträgt im Zahlenmittel vorzugsweise 1.000 - 15.000, insbesondere 1.500 - 8.000, besonders bevorzugt 2.000 - 5.000.

Der Thiolester und/oder der Thioether der erfindungsgemäßen Zusammensetzung ist ein oligomeres Thiourethan. Das oligomere Thiourethan ist erhältlich durch Umsetzung mindestens eines Thiolesters, der zwei oder mehr Estergruppen und zwei oder mehr Thiolgruppen aufweist, mit mindestens einem Di- oder Polyisocyanat, wobei das oligomere Thiourethan zwei oder mehr freie Thiolgruppen aufweist und/oder vorzugsweise durch Umsetzung mindestens eines Thioethers, der zwei oder mehr Thiolgruppen aufweist, mit mindestens einem Di- oder Polyisocyanat, wobei auch hier das oligomere Thiourethan zwei oder mehr freie Thiolgruppen aufweist.

In einer weiteren bevorzugten Ausgestaltung stellt der Thiolester der erfindungsgemäßen Zusammensetzung eine Mischung aus zwei oder mehr oligomeren Thiourethanen dar. Die oligomeren Thiourethane sind vorzugsweise jeweils erhältlich wie oben beschrieben.

Das Zahlenmittel der im oligomeren Thiourethan enthaltenen Monomere beträgt vorzugsweise 3 - 100, weieter vorzugsweise 5 - 80, insbesondere 3 - 45, weiter bevorzugt 5 - 25, besonders bevorzugt 7 - 15. Der Anteil des oligomeren Thiourethans oder der oligomeren Thiourethane, bezogen auf das Gesamtgewicht der Zusammensetzung, beträgt 10 - 60 Gew.-%, bevorzugt 10 - 50 Gew.-%, insbesondere 20 - 50 Gew.-%.

Bevorzugt sind Oligomere bzw. oligomere Thiourethane aus Pentaerythrol-tetra-(3-mercaptopropionat) (PTMP) mit Xylylendiisocyanat (XDI), aus Pentaerythrol-tetra-(3-mercaptopropionat) mit Norbornyldiisocyanat (NBDI) oder aus Pentaerythrol-tetra-(3-mercaptopropionat) mit Isophorondiisocyanat (IPDI) sowie Oligomere aus Trimethylolpropan-tri-(3-mercaptopropionat) (TPMP) mit Xylylendiisocyanat, aus Trimethylolpropan-tri-(3-mercaptopropionat) mit Norbornyldiisocyanat (NBDI) oder aus Trimethylolpropan-tri-(3-mercaptopropionat) mit Isophorondiisocyanat (IPDI). Vorzugsweise ist in diesen Oligomeren das Verhältnis aus Mercaptopropionat und Diisocyanat 20:1 bis 5:1, damit die Diisocyanatgruppen vollständig umgesetzt sind.

### Beispiel PTMP/XDI:

PTMP Molekulargewicht 488 g/mol, 4 SH-Gruppen
   XDI Molekulargewicht 188 g/mol, 2 NCO-Gruppen
   Herstellung der Oligomere: Das Polythiol wird im stöchiometrischen Überschuss unter Schutzgas mit dem Isocyanat vollständig umgesetzt. Kontrolle durch IR-Spektroskopie (NCO-Bande bei ca. 2260 cm⁻¹). Kann im IR-Spektrum keine NCO-Bande mehr nachgewiesen werden, ist der Anteil an freiem Isocyanat in der Regel < 0,05 Gew.-%.
   Präpolymer PTMP/XDI 100+10: es sind 13,0% der SH-Gruppen umgesetzt.
   Präpolymer PTMP/XDI 100+15: Es sind 19,5% der SH-Gruppen umgesetzt.
   Präpolymer PTMP/XDI 100+20: Es sind 26,0% der SH-Gruppen umgesetzt.
   Das Verhältnis PTMP zu XDI orientiert sich an der Viskosität der
   Präpolymere/Oligomere, die sich bei der Umsetzung ergeben, die damit die
   Viskosität des resultierenden Klebstoffs maßgeblich beeinflussen.

Als besonders vorteilhaft hat sich eine Zusammensetzung erwiesen, enthaltend
(A) Bisphenol-A-diglycidether und/oder Bisphenol-F-diglycidether,
(B) 10 - 50 Gew.-%, insbesondere 20 - 40 Gew.-%, bezogen auf das Gesamtgewicht der Zusammensetzung, eines Thiolesters in Form eines oder mehrerer oligomerer Thiourethane, jeweils erhältlich aus Pentaerythrol-tetra-(3-mercaptopropionat) (PTMP) und/oder Trimethylolpropan-tri-(3-mercaptopropionat) (TPMP) mit Xylylendiisocyanat (XDI), Norbornyldiisocyanat (NBDI) und/oder Isophorondiisocyanat (IPDI), wobei jedes oligomere Thiourethan zwei oder mehr freie Thiolgruppen aufweist, und
(C) 0,005 - 0,3 Gew.-%, bezogen auf das Gesamtgewicht der Zusammensetzung, ein oder mehrere tertiäre Amine, ausgewählt aus der Gruppe bestehend aus 1,5- Diazabicyclo-[4.3.0]-non-5-en (DBN), 1,8- Diazabicyclo-[5.4.0]-undec-7-en (DBU) und 1,4-Diazabicyclo-[2.2.2]-octan (DABCO) oder 0,3 - 2 Gew.-%, bezogen auf das Gesamtgewicht der Zusammensetzung, ein oder mehrere tertiäre Amine, ausgewählt aus der Gruppe bestehend aus 1-(2-Hydroxyethyl)-pyrrolidin, 1-(2-Hydroxyethyl)-pyrrolidon, 1-(2-Hydroxyethyl)-piperidin, 1-Ethylpiperazin, 1-(2-Hydroxyethyl)-piperazin, 1,4-Bis-(2-hydroxyethyl)-piperazin, und 4-(2-Hydroxyethyl)-morpholin,
wobei die Zusammensetzung weniger als 1 Gew.-% primäres Amin enthält.

Als vorteilhaft hat sich auch eine Zusammensetzung erwiesen, die neben den oben beschriebenen Komponenten (A) - (C) zusätzlich ein Oligomer umfasst, insbesondere das oben beschriebene oligomere Thiourethan. Mit besonderem Vorteil ist dies eine Zusammensetzung enthaltend, vorzugsweise bestehend aus,
(A) Bisphenol-A-diglycidether und/oder Bisphenol-F-diglycidether,
(B) Pentaerythrol-tetra-(3-mercaptopropionat) und/oder Trimethylolpropan-tri-(3-mercaptopropionat) und
(C) 0,005 - 2 Gew.-%, bezogen auf das Gesamtgewicht der Zusammensetzung, 1-(2-Hydroxyethyl)-pyrrolidin, 1-(2-Hydroxyethyl)-pyrrolidon, 1-(2-Hydroxyethyl)-piperidin, 1-Ethylpiperazin, 1-(2-Hydroxyethyl)-piperazin, 1,4-Bis-(2-hydroxyethyl)-piperazin, 4-(2-Hydroxyethyl)-morpholin, 1,4-Diazabicyclo-[2.2.2]-octan (DABCO), 1,5- Diazabicyclo-[4.3.0]-non-5-en (DBN) und/oder 1,8- Diazabicyclo-[5.4.0]-undec-7-en (DBU), sowie gegebenenfalls
(D) 10 - 50 Gew.-%, insbesondere 20 - 40 Gew.-%, bezogen auf das Gesamtgewicht der Zusammensetzung, eines Oligomers aus Pentaerythrol-tetra-(3-mercaptopropionat) (PTMP) und/oder Trimethylolpropan-tri-(3-mercaptopropionat) (TPMP) mit Xylylendiisocyanat (XDI), Norbornyldiisocyanat (NBDI) und/oder Isophorondiisocyanat (IPDI),
wobei die Zusammensetzung weniger als 1 Gew.-%, vorzugsweise weniger als 0,1 Gew.-%, primäres Amin enthält.

In einer vorteilhaften Ausgestaltung enthält die erfindungsgemäße Zusammensetzung 10 - 85 Gew.-%, insbesondere 30 - 70 Gew.-%, vorzugsweise 40 - 60 Gew.-%, bezogen auf das Gesamtgewicht der Zusammensetzung, an Epoxidverbindung mit zwei oder mehr Epoxidgruppen, und 30 - 70 Gew.-%, bezogen auf das Gesamtgewicht der Zusammensetzung, vorzugsweise 40 - 60 Gew.-% an Thiolester mit zwei oder mehr Estergruppen und zwei oder mehr Thiolgruppen.

In einer weiteren Ausgestaltung der erfindungsgemäßen Zusammensetzung enthält diese keine weiteren Verbindungen, die mit dem Epoxid eine Ringöffnungsreaktion eingehen können. Insbesondere ist bevorzugt, dass die erfindungsgemäße Zusammensetzung weniger als 1 Gew.-%, vorzugsweise weniger als 0,1 Gew.-%, bezogen auf das Gesamtgewicht der Zusammensetzung, Alkohol und/oder Phenol enthält.

In einer weiteren vorteilhaften Ausgestaltung ist die Zusammensetzung UV-härtbar und enthält dazu zusätzlich die folgenden Komponenten: 0,5 - 2 Gew.-%, bezogen auf das Gesamtgewicht der Zusammensetzung, einer photolatenten Base und einen Photoinitiator. Bevorzugt ist die Komponente (C) eine photolatente Base und in einer Menge von 0,5 - 2 Gew.-%, bezogen auf das Gesamtgewicht der Zusammensetzung, in der Zusammensetzung enthalten.

Wie oben erläutert wird unter der photolatenten Base im Sinne der Erfindung die photolatente Basenverbindung gemäß Patentanspruch 1 der EP 2 145 231 B1 verstanden. Ein Photoinitiator im Sinne der Erfindung ist eine chemische Verbindung, die durch Absorption von Licht in reaktionsfähige Bruchstücke zerfällt. Diese reaktionsfähigen Bruchstücke lösen dann in der erfindungsgemäßen Zusammensetzung die Schutzgruppe von der photolatenten Base ab, so dass eine stark basische Amidinstruktur aus der photolatenten Base entsteht, die als Base die Polymerisationsreaktion zwischen dem Epoxid und der SH-Gruppe des Thiolesters katalysiert. Auf diese Weise wird die aminkatalysierte Thiolreaktion mit dem Epoxid im Bereich der Einwirkung von UV-Licht lokal beschleunigt, wodurch die Aushärtezeit der Zusammensetzung stark verkürzt wird.

Zusätzlich kann zum Photoinitiator ein Farbstoff enthalten sein. Der Farbstoff wird der Harzkomponente (A) zugesetzt, um die UV-Aktivierung sichtbar zu machen. Bei der Verwendung von Sudanblau wird durch die Bestrahlung mit UV-Licht (365 nm) ein Farbumschlag von blau nach gelb beobachtet. Der Vorgang ist irreversibel. Er kann dazu dienen die UV-Aktivierung des Klebstoffs sichtbar zu machen.

Es wurde festgestellt, dass keine signifikanten Unterschiede bei den Polymeren und deren Gebrauchseigenschaften zwischen einer Dunkelhärtung und einer Härtung nach UV-Aktivierung der erfindungsgemäßen Zusammensetzung bestehen.

Bevorzugt wird als photolatente Base ein gegebenenfalls substituiertes 5-(Carbonylarylmethyl)-1,5-diazabicyclo-[4.3.0]-nonan oder ein gegebenenfalls substituiertes 8-(Carbonylarylmethyl)-1,8-diazabicyclo-[5.4.0]-undecan eingesetzt. Besonders bevorzugt sind als Komponente (C) und als photolatente Base gegebenenfalls substituiertes 5-(4-Alkoxycarbonylbenzylmethyl)-1,5-diazabicyclo-[4.3.0]-nonan oder ein gegebenenfalls substituiertes 8-(4-Alkoxycarbonyl-benzylmethyl)-1,8-diazabicyclo-[5.4.0]-undecan. Aus diesen bevorzugten photolatenten Basen entstehen durch die Bestrahlung mit UV-Licht (Licht mit einer Wellenlänge von etwa 200 - 450 nm) 1,5-Diazabicyclo-[4.3.0]-non-5-en (DBN) bzw. 1,8- Diazabicyclo-[5.4.0]-undec-7-en (DBU).

Erfindungsgemäß bevorzugte Photoinitiatoren sind Benzophenon und Hydroxybenzophenonderivate wie z.B. Darocur 1173 (2-Hydroxy-2-methyl-1-phenyl-propan-1-on) und Irgacure 1700 (Darocur 1173 + Bis-(2,6-dimethoxybenzoyl)-2,4,4-trimethylpentylphosphinoxid). Diese Verbindungen werden vorzugsweise als Komponente (C) in einer Menge von 0,5 - 2 Gew.-%, bezogen auf das Gesamtgewicht der Zusammensetzung, in der Zusammensetzung eingesetzt, vorzugsweise in der Komponente, die das Epoxid umfasst.

Bei Verwendung der erfindungsgemäßen Zusammensetzung als Einbettmedium oder zum Kleben von Gläsern ist es von Vorteil, wenn die Zusammensetzung zusätzlich ein Alkoxysilan enthält. Das Alkoxysilan trägt unter anderem zur Haftung zum Glas bei, zum Beispiel zwischen dem Einbettmedium und dem regelmäßig verwendeten Glas des Objektträgers und des Deckglases.

Ein Alkoxysilan im Sinne der Erfindung ist eine Verbindung der Form (R¹O)ₙSiR²₃₋ₙR³, worin n = 1 - 3 ist, vorzugsweise n = 3, R¹ und R² unabhängig voneinander aliphatische, cycloaliphatische oder aromatische Reste sind, mit 1 - 10 Kohlenstoffatomen, bevorzugt aliphatische Reste mit 1 - 4 Kohlenstoffatomen, d.h. Methyl, Ethyl, Propyl, Isopropyl, n-Butyl, iso-Butyl, sec-Butyl oder tert-Butyl, und R³ ein polymerisierbarer Rest ist. Bevorzugt für R³ sind organische Reste mit einer oder mehreren Epoxy- oder Mercaptangruppe(n). Bevorzugte Alkoxysilane sind Trialkoxysilane, insbesondere solche der Formel (R¹O)₃SiR³. Besonders bevorzugt sind Trimethoxysilane. Das Alkoxysilan ist in der Zusammensetzung bevorzugterweise in einer Menge von 0,3 - 3 Gew.-%, insbesondere 0,5 - 2 Gew.-%, bezogen auf das Gesamtgewicht der Zusammensetzung, enthalten.

Eine besonders gute Haftfestigkeit zum Glas wird erreicht, wenn das Alkoxysilan zusätzlich eine polymerisierbare Gruppe aufweist. Indem das Alkoxysilan so mit einpolymerisiert wird, wird eine besonders hohe Haftfestigkeit und Stabilität erreicht. Bevorzugt umfasst das Alkoxysilan eine Epoxidgruppe oder eine Thiolgruppe. Besonders bevorzugt sind 3-Glycidyloxypropyltrimethoxysilan (GLYMO) und 3-Mercaptopropyltrimethoxysilan (MTMO).

Weiter kann die erfindungsgemäße Zusammensetzung zusätzlich Weichmacher, Festweichmacher (Schmelzpunkt ≥ 40°C), Kunstharze (beispielsweise Kunstharz SK und Kunstharz CA); Farbstoffe (zum Beispiel Sudanblau oder Seripas Red) und/oder Polymere wie zum Beispiel Ethylenvinylacetat-Copolymere (EVA) enthalten. Des weiteren können Füllstoffe wie Quarzmehle (Silbond) und hochdisperse Kieselsäure als Zusatzstoffe eingesetzt werden. Mit Vorteil können als Weichmacher Phthalsäurepolyester, Adipinsäurepolyester und Phosphorsäureester, als Festweichmacher Phenylbenzoat, Glycerintribenzoat, 1,4-Cyclohexandimethanoldibenzoat, Pentaerythritol-tetrabenzoat, Bis(2-hydroxyethyl)terephthalat, und Triphenylphosphat und als Kunstharze Ketonharze, Aldehydharze, Acrylharze, Polyterpenharze und modifizierte Phenolharze eingesetzt werden.

In einer bevorzugten Ausgestaltung ist die Zusammensetzung ein Zweikomponentensystem, bei dem die erste Komponente das Epoxid (A) umfasst und die zweite Komponente Thiolester (B) und tertiäres Amin (C) und gegebenenfalls das Oligomer (D) umfasst. Die erfindungsgemäße Zusammensetzung mit UV-Aktivierung ist ebenfalls bevorzugt ein Zweikomponentensystem, bei dem die erste Komponente (A) und (F) umfasst und die zweite Komponente (B), (C) und (E) und gegebenenfalls (D) umfasst. Das Alkoxysilan (G) kann Teil der ersten oder zweiten Komponente sein, sofern es mit den anderen Komponenten nicht reagiert. Ist (G) ein Epoxid, sollte die erste Komponente (A), (F) und (G) umfassen, ist (G) ein Thiol, sollte die zweite Komponente (B), (C), (E), (G) und gegebenenfalls (D) umfassen.

Die Erfindung betrifft ferner die Verwendung der erfindungsgemäßen Zusammensetzung als Klebstoff, insbesondere für feinmechanische und optische Geräte, und die Verwendung als Einbettmedium für die Mikroskopie. Eine bevorzugte Verwendung ist die Verwendung der erfindungsgemäßen Zusammensetzung für Klebungen von feinmechanischen oder optischen Geräten. Hier sind insbesondere die oben beschriebenen zusätzlichen Oligomere (Präpolymere) von Interesse, um Verspannungen zu reduzieren.

Die Applikation der erfindungsgemäßen Zusammensetzungen als Klebstoffformulierung erfolgt bevorzugt in Doppelkartuschen (2+1-Volumenteile bzw. 1+1-Volumenteile) unter Verwendung eines statischen Mischrohres. Damit wird der Anmischvorgang des Klebstoffs für den Anwender erheblich erleichtert. Beim Einsatz als optisch funktionelles Polymersystem zum Feinkitten optischer Komponenten bzw. zum Einbetten von mikroskopischen Präparaten werden Harz und Härter überwiegend mit einer Feinwaage in ein sauberes Anmischglas eingewogen und danach schlierenfrei gemischt. Die für den Einsatz von Doppelkartuschen vorgegebenen festen Mischungsverhältnisse können aufgrund bestehender Anforderungen an den optischen Klebstoff häufig nicht realisiert werden.

Die im Rahmen der vorliegenden Erfindung konzipierten Klebstoffe können mit optisch funktionellen Eigenschaften wie definierte Brechzahl, Dispersion, hohe Transmission, geringe Restfluoreszenz, Spannungsarmut hergestellt werden, indem Komponenten mit optischer Qualität eingesetzt werden. Zum Erreichen solcher Qualitäten kann es auch erforderlich sein, die verwendeten Rohstoffe aufzureinigen, z.B. durch Kurzwegdestillation im Feinvakuum oder durch Reinigung über Aktivkohle bzw. über aktiviertes Aluminiumoxid.

Eine gewünschte Brechzahl oder Dispersion (Abbezahl) solcher Klebstoffe lässt sich durch die Auswahl der eingesetzten Komponenten, insbesondere deren Reste, auf den gewünschten Zweck einstellen. Die Brechwertanpassung von Klebstoffen für Optikkomponenten (Feinkitte), insbesondere die Brechwertanpassung an eine zu verklebende Optikkomponente, kann für definierte Wellenlängen erfolgen (z.B. bei optischen Meßsystemen) oder aber auch bei polychromatischen Anwendungen für einen bestimmten Wellenlängenbereich (z.B. 450 nm - 700 nm). Bei polychromatischer Brechwertanpassung ist es wichtig, die Dispersion (Wellenlängenabhängigkeit des Brechwerts) von Feinkitt und Optikkomponenten so gut wie möglich aufeinander abzustimmen. Üblicherweise wird in solchen Fällen eine Schwerpunktwellenlänge definiert, z.B. 546 nm (nₑ). Die Dispersion von Feinkitten kann durch die verwendeten Kittkomponenten gesteuert werden, da die chemische Struktur der Monomersubstanzen erheblichen Einfluss auf den Brechwert und die Dispersion hat. Die exakte Brechwertanpassung von (ausgehärteten) Feinkitten an Optikkomponenten wird auch als "Indexmatching" bezeichnet.

Eine spezielle Anwendung ist die Verkittung optischer Bauteile, die teilweise diffraktive, reflektive und/oder andere mikrooptische Elemente an einer Bauteiloberfläche aufweisen. Erfolgt eine Brechwertanpassung auf Δn < 0,0005 sind beispielsweise in der Kittschicht eingeschlossene diffraktive Strukturen optisch nicht mehr erkennbar.

Für ein Indexmatching mit hoher Genauigkeit sollten Kittkomponenten mit möglichst definierten Brechwerten eingesetzt werden. Bevorzugt sollten die Harzkomponente des Feinkitts, wie auch der Härter auf eine Genauigkeit von Δn < 0,0002 reproduzierbar hergestellt werden. Um diese Genauigkeit zu realisieren, werden für die Harzkomponente (Epoxidverbindung, Komponente (A)) und/oder für die Härterkomponente (Thiolester (B) bzw. oligomeres Thiourethan) vorzugsweise mindestens zwei Hauptbestandteile, z.B. Thiolester oder Thiourethane, mit unterschiedlichen Brechwerten verwendet.

Überraschenderweise haben sich die erfindungsgemäßen Zusammensetzungen als Feinkitte mit hoher Brechwertanpassung als besonders geeignet erwiesen. Von Vorteil ist es dabei, die oben beschriebenen oligomeren Thiourethane einzusetzen (reduzierte Volumenschrumpf, geringe Spannungen bei der Härtung, angepasste Viskosität an die Harzkomponente - dadurch bessere Mischbarkeit von Harz und Härter). Präpolymere Polythiole lassen sich durch vollständige Umsetzung von Polythiolen mit Diisocyanaten im Unterschuss herstellen. Durch temperaturkontrollierte Reaktionsführung können diese Präpolymere besonders reproduzierbar hergestellt werden.

Die Erfindung betrifft ferner ein Verfahren zum Kleben von Werkstücken, umfassend die Schritte, dass (A) eine Epoxidverbindung mit zwei oder mehr Epoxidgruppen, (B) ein Thiolester mit zwei oder mehr Estergruppen und zwei oder mehr Thiolgruppen, (C) 0,005 - 2 Gew.-%, bezogen auf das Gesamtgewicht der Zusammensetzung, eines tertiären Amins, das einen 5- oder 6-gliedrigen aliphatischen Stickstoff-Heterocyclus aufweist, und gegebenenfalls (D) 10-50 Gew.-%, bezogen auf das Gesamtgewicht der Zusammensetzung, eines Oligomers vermischt werden und die Mischung im Anschluss mit den zu verklebenden Werkstücken in Kontakt gebracht wird.

Des weiteren betrifft die Erfindung ein Verfahren zum Kleben von Werkstücken, umfassend die Schritte, dass (A) eine Epoxidverbindung mit zwei oder mehr Epoxidgruppen, (B) ein Thiolester mit zwei oder mehr Estergruppen und zwei oder mehr Thiolgruppen, (C) 0,005 - 2 Gew.-%, bezogen auf das Gesamtgewicht der Zusammensetzung, eines tertiären Amins, das einen 5- oder 6-gliedrigen aliphatischen Stickstoff-Heterocyclus aufweist, 0,5 - 2 Gew.-% einer photolatenten Base und ein Photoinitiator sowie gegebenenfalls 10-50 Gew.-%, bezogen auf das Gesamtgewicht der Zusammensetzung, eines Oligomers, vermischt werden, die Mischung mit den zu verklebenden Werkstücken in Kontakt gebracht wird und anschließend mit Licht einer Wellenlänge von 200 bis 450 nm bestrahlt wird, wobei die Mischung aushärtet.

Ferner wird ein Verfahren zum Herstellen eines Optikelementes, das für einen vorbestimmten Wellenlängenbereich transparent ist und in dem eine optisch wirksame Struktur eingebettet ist, bereitgestellt, das die folgenden Schritte aufweist:
a) Bereitstellen einer ersten für den vorbestimmten Wellenlängenbereich transparenten Schale, die einstückig ausgebildet ist und die an ihrer Oberseite einen strukturierten Abschnitt aufweist,
b) Aufbringen einer für den vorbestimmten Wellenlängenbereich optisch wirksamen Beschichtung auf dem strukturierten Abschnitt, um die optisch wirksame Struktur zu bilden,
c) Bereitstellen einer zweiten für den vorbestimmten Wellenlängenbereich transparenten Schale, die einstückig ausgebildet ist und die eine glatte Unterseite aufweist, die eine komplementäre Form zur Form der Oberseite aufweist,
d) Aufbringen einer für den vorbestimmten Wellenlängenbereich transparenten erfindungsgemäßen Zusammensetzung als Klebstoff auf der Oberseite der ersten Schale und/oder der Unterseite der zweiten Schale und
e) Verbinden der Oberseite der ersten Schale mit der Unterseite der zweiten Schale mittels des Klebstoffs, so dass ein zweischaliges Optikelement hergestellt wird, in dem die optisch wirksame Struktur eingebettet ist.

Mit diesem erfindungsgemäßen Verfahren kann das Optikelement mit nur zwei Schalen (insbesondere mit genau zwei Schalen) mit der gewünschten Genauigkeit in großer Stückzahl hergestellt werden. Das Optikelement kann jedoch auch mehr als zwei Schalen sowie zwei oder mehrere Teile aufweisen, die mit der erfindungsgemäßen Zusammensetzung miteinander verklebt oder verbunden werden.

Insbesondere kann die erste und zweite Schale in den Schritten a) und c) jeweils als formstabile Schale bereitgestellt werden. Unter einer formstabilen Schale wird insbesondere eine Schale verstanden, die ihre Form beibehält, wenn außer der Schwerkraft keine anderen Kräfte auf sie einwirken.

Ferner können die erste und zweite Schale in den Schritten a) und c) so bereitgestellt werden, dass die Oberseite und die Unterseite gekrümmt ausgebildet sind. Des Weiteren können die erste und zweite Schale so bereitgestellt werden, dass die jeweilige von der Ober- und Unterseite wegweisende Seite gekrümmt ausgebildet ist. Die Krümmung kann dabei eine sphärische Krümmung, eine asphärische Krümmung oder eine sonstige Krümmung sein.

Die erste Schale kann im Schritt a) so bereitgestellt werden, dass die Oberseite mit Ausnahme des strukturierten Abschnittes als glatte Fläche ausgebildet wird.

Des Weiteren kann nach dem Schritt b) zumindest eine durch den strukturieren Abschnitt gebildete Vertiefung mit Material bis zur Oberseite aufgefüllt werden. Dabei wird bevorzugt das gleiche Material verwendet, aus dem die erste Schale gebildet ist. Ferner kann die erfindungsgemäße Zusammensetzung zum Auffüllen verwendet werden.

Die Auffüllung kann in einem Schritt oder in mehreren Auffüllschritten durchgeführt werden. Insbesondere wird die Auffüllung so durchgeführt, dass eine glatte durchgehende Oberseite vorliegt. Der aufgefüllt strukturierte Abschnitt bildet somit zusammen mit der restlichen Oberseite eine durchgehende Fläche.

Bei dem erfindungsgemäßen Verfahren kann im Schritt d) der Klebstoff als Kleberschicht auf der gesamten Oberseite der ersten Schale und/oder der gesamten Unterseite der zweiten Schale aufgebracht werden. Insbesondere kann auch der strukturierte Abschnitt (bevorzugt wenn er bis zur Oberseite mit Material aufgefüllt ist) mit der Kleberschicht versehen werden.

Die erste Schale, die auch als erster Teilkörper oder erstes Halbzeug bezeichnet werden kann, kann aus einem ersten Polymermaterial und die zweite Schale, die auch als zweiter Teilkörper oder zweites Halbzeug bezeichnet werden kann, kann aus einem zweiten Polymermaterial hergestellt sein. Das erste Polymermaterial und das zweite Polymermaterial kann jeweils ein thermoplastisches Material und/oder ein duroplastisches Material sein. Als thermoplastisches Material kann z. B. PMMA (Polymethylmethacrylat, z. B. Plexiglas), PA (Polyamide, z. B. Trogamid CX), COP (Cycloolefin-Polymere, z. B. Zeonex), PC (Polycarbonat, Poly(bisphenol-A-carbonat), z. B. Makrolon, insbesondere LQ 2647), LSR (Liquid Silicone Rubber, z. B. Silopren, Elastosil), PSU (Polysulfon, z. B. Ultrason), PES (Polyethersulfon) und/oder PAS (Polyarylensulfon) verwendet werden. Als duroplastisches Material kann z. B. ADC (Allyl-Diglykolcarbonat, z. B. CR-39), Acrylate (z. B. Spectralite), PUR (Polyurethane, z. B. RAVolution), PU/PUR (Polyharnstoffe, Polyurethane, z. B. Trivex), PTU (Polythiourethane, z. B. MR-8, MR-7) und/oder Polymere auf Episulfid/Polythiol-Basis (z. B. MR-174) verwendet werden.

Insbesondere kann die optisch wirksame Struktur vollständig im Optikelement eingebettet sein, so dass sie sich zu keiner äußeren Grenzfläche des Optikelementes erstreckt. Bevorzugt ist die optisch wirksame Struktur in ihren Abmessungen kleiner als die Abmessungen des Optikelementes. Man kann auch sagen, dass die optisch wirksame Struktur nur in einem Teil des Optikelementes ausgebildet ist. Die eingebettete optisch wirksame Struktur kann eine maximale laterale Abmessung aufweisen, die kleiner ist als die maximale laterale Abmessung des Optikelementes. Insbesondere kann sie kleiner als 50% der lateralen Abmessung des Optikelementes oder auch kleiner als 40%, 30%, 20% der lateralen Abmessung des Optikelementes sein. Die optisch wirksame Struktur ist somit bevorzugt im Optikelement eingebettet aber nur partiell vorgesehen.

Bei dem erfindungsgemäßen Verfahren kann nach dem Schritt b) und vor dem Schritt d) auf der optisch wirksamen Beschichtung eine Schutzschicht aus duroplastischem Material durch Gießen aufgebracht werden. Dazu kann insbesondere das RIM-Verfahren (Reaction Injection Moulding-Verfahren) eingesetzt werden. Dabei können z. B. zwei Komponenten unmittelbar vor dem Injizieren in eine Form vermischt werden, so dass die Komponenten miteinander reagieren und ein gewünschtes chemisch vernetztes Polymer bilden können. Die erste Schale ist dabei bevorzugt in einer entsprechenden Form positioniert, so dass die gewünschte Schutzschicht gebildet werden kann.

Die optisch wirksame Struktur kann beispielsweise als reflektive und/oder diffraktive Struktur ausgebildet sein. Insbesondere kann die optisch wirksame Struktur als teilreflektive Struktur und/oder wellenlängenabhängige reflektive Struktur ausgebildet sein.

Die Bildung der ersten und/oder zweiten Schale kann insbesondere jeweils in zumindest zwei aufeinanderfolgenden Teilschritten durchgeführt werden. Dies führt zu einem verringerten Schwund bei der Herstellung der ersten bzw. zweiten Schale.

Bei dem erfindungsgemäßen Verfahren können als erstes und zweites Polymermaterial solche Materialien verwendet werden, deren Brechzahlen sich für zumindest eine Wellenlänge aus dem vorbestimmten Wellenlängenbereich um nicht mehr als 0,005 oder 0,001 unterscheiden. Insbesondere können sich die Brechzahlen um nicht mehr als 0,0005 unterscheiden. Bei einem solch geringen Brechzahlunterschied verschwindet quasi optisch die Grenzfläche zwischen den beiden Polymermaterialien für den vorbestimmten Wellenlängenbereich. Insbesondere können die Polymermaterialien so gewählt sein, dass sie im vorbestimmten Wellenlängenbereich die gleiche Dispersion aufweisen.

Bei dem vorbestimmten Wellenlängenbereich kann es sich um den sichtbaren Wellenlängenbereich, den nahen Infrarotbereich, den Infrarotbereich und/oder den UV-Bereich handeln.

Zum Bereitstellen der ersten Schale gemäß Schritt a) und der zweiten Schale gemäß Schritt c) kann jeweils ein Urformverfahren (wie z. B. Spritzguß, Spritzprägen, RIM, Abgießen), ein Umformverfahren (wie z. B. Thermoforming, Hot Embossing), ein abtragendes und/oder trennendes Verfahren (wie z. B. Diamantzerspanung, Ionenbeschuß, Ätzen) eingesetzt werden. Natürlich ist es auch möglich, diese Verfahren zur Bereitstellung der ersten oder zweiten Schale miteinander zu kombinieren.

Die erste Schale sowie die zweite Schale sind jeweils insbesondere als formstabiles Halbzeug gebildet, die mittels der Kleberschicht miteinander verbunden werden.

Insbesondere kann die erste Schale eine mittlere Dicke aus dem Bereich von 2 mm - 5 mm (z.B. 3,5 mm) aufweisen und kann die zweite Schale eine mittlere Dicke aus dem Bereich von 0,15 mm bis 2 mm oder aus dem Bereich von 0,15 mm bis 0,25 mm (z.B. 0,17 mm) aufweisen. Das Verhältnis der mittleren Dicke der ersten Schale zur mittleren Dicke der zweiten Schale kann im Bereich von 5 - 40, 10 - 35, 15 - 25 oder 18 - 22 (z.B. 20, 20,5 oder 21) liegen.

Die erste Schale kann einen Bereich am Rand (bzw. einen randständigen Bereich) aufweisen, der eine größere Dicke als die mittlere Dicke der ersten Schale aufweist. Der randständige Bereich wird bevorzugt bei der Bestimmung der mittleren Dicke der ersten Schale nicht berücksichtigt. Des weiteren kann der randständige Bereich einstückig mit der ersten Schale ausgebildet sein oder kann ein separates Element sein, das mit der ersten Schale verbunden ist. Zum Beispiel kann der randständige Bereich mit der ersten Schale verklebt oder verkittet sein. Der randständige Bereich kann so ausgebildet sein, dass er zumindest eine weitere optische Funktionalität bereitstellt. Dabei kann es sich insbesondere um eine diffraktive und/oder reflektive optische Funktionalität handeln. Insbesondere kann die erste Schale mit dem randständigen Bereich so ausgebildet sein, dass sie L-förmig ist.

Das Aufbringen der optisch wirksamen Beschichtung gemäß Schritt b) kann beispielsweise durch Aufdampfen, Sputtern, CVD (chemisches Abscheiden aus der Gasphase), Nassbeschichtung, etc. erfolgen. Die Beschichtung kann eine Einzelschicht sein. Es ist jedoch auch möglich, mehrere Schichten aufzubringen. Insbesondere kann auch ein Interferenzschichtsystem aufgebracht werden. Ferner kann zusätzlich zumindest eine Schicht zur Haftvermittlung, eine Schicht zum mechanischen Ausgleich, eine Schutzschicht (Diffusion/Migration, thermischer Schutz, chemischer Schutz, UV-Schutz etc.) aufgebracht werden. Die optisch wirksame Beschichtung kann für spezielle Wellenlängen bzw. Spektralbereiche ausgelegt sein. Ferner kann sie zusätzlich oder alternativ ihre Funktion abhängig vom Einfallswinkel, von der Polarisation und/oder von weiteren optischen Eigenschaften aufweisen. Die optisch wirksame Struktur kann reflektierend, insbesondere hochreflektierend (z. B. spiegelartig), teildurchlässig/teilverspiegelt sein und/oder kann eine Filterwirkung bereitstellen. Ferner kann die optisch wirksame Beschichtung ein diffraktives optisches Element sein.

Die optisch wirksame Beschichtung kann nur auf den strukturierten Abschnitt aufgebracht werden. Alternativ ist es möglich, die optisch wirksame Beschichtung vollflächig aufzubringen und dann in den nicht benötigten Flächenabschnitten zu entfernen. Für ein solches Entfernen kann man z. B. chemisches Ätzen oder lonenätzen einsetzen.

Für die optisch wirksame Beschichtung kann zumindest ein Metall, zumindest ein Metalloxid, zumindest ein Metallnitrid verwendet werden. Auch ein organisches Material und/oder ein Polymermaterial kann verwendet werden. Ferner können sogenannte Hybridmaterialien, wie z. B. organisch-anorganische Hybridsysteme, organisch-modifizierte Silane/Polysiloxane verwendet werden.

Ferner können die Schritte a)-e) so ausgeführt werden, dass die optisch wirksame Struktur voneinander beabstandete Flächenstücke aufweist, die die gewünschte optische Funktion bereitstellen. Die Flächenstücke können beispielsweise reflektive Flächenstücke sein. Die reflektiven Flächenstücke können eine vollständige Reflexion (nahezu 100%) oder auch nur eine Teilreflexion (teilreflektive Flächenstücke) bewirken. Insbesondere liegen die reflektiven Flächenstücke in keiner gemeinsamen Ebene. Sie können zueinander parallel versetzt sein.

Die reflektiven Flächenstücke können zusammen eine umlenkende Wirkung und gegebenenfalls zusätzlich auch noch eine abbildende Wirkung bereitstellen.

Die Flächenstücke können für sich jeweils als plane Flächenstücke oder auch als gekrümmt ausgebildete Flächenstücke gebildet sein.

Bei dem erfindungsgemäßen Verfahren kann das Optikelement nach Durchführen des Schrittes e) fertiggestellt sein. Es ist jedoch auch möglich, noch zumindest einen materialabtragenden Bearbeitungsschritt durchzuführen, um beispielsweise die von der ersten Schale wegweisende Grenzfläche der zweiten Schale zu bearbeiten oder herauszuarbeiten. Gleiches gilt für die von der zweiten Schale wegweisende Grenzfläche der ersten Schale.

Natürlich kann auch noch zumindest ein oberflächenvergütender Verfahrensschritt durchgeführt werden, wie z. B. das Aufbringen einer Antireflexionsbeschichtung, einer Hartschicht, etc. Insbesondere können die aus der Fertigung von Brillengläsern bekannten Vergütungen durchgeführt werden.

Mit dem erfindungsgemäßen Verfahren kann somit das fertige Optikelement bereitgestellt werden. Es ist jedoch auch möglich, dass noch weitere Verfahrensschritte notwendig sind, um das Optikelement so fertigzustellen, dass es für seinen bestimmungsgemäßen Gebrauch einsetzbar ist.

Es wird ferner ein Optikelement, das für einen vorbestimmten Wellenlängenbereich transparent ist und in dem eine optisch wirksame Struktur eingebettet ist, bereitgestellt, wobei das Optikelement durch die Schritte des erfindungsgemäßen Verfahrens (einschließlich seiner Weiterbildungen) hergestellt ist.

Insbesondere kann das Optikelement als Brillenglas für eine auf den Kopf eines Benutzers aufsetzbare und ein Bild erzeugende Anzeigevorrichtung ausgebildet sein sowie eine Vorderseite und eine Rückseite, einen Einkoppelabschnitt und einen vom Einkoppelabschnitt beabstandeten Auskoppelabschnitt und einen Lichtführungskanal aufweisen, der Lichtbündel von Pixeln des erzeugten Bildes, die über den Einkoppelabschnitt des Optikelementes in das Optikelement eingekoppelt sind, im Optikelement bis zum Auskoppelabschnitt führt, von dem sie aus dem Brillenglas ausgekoppelt werden, wobei der Auskoppelabschnitt die optisch wirksame Struktur aufweist, die eine Umlenkung der Lichtbündel zur Auskopplung bewirkt, und wobei die Vorderseite von der von der ersten Schale wegweisenden Seite der zweiten Schale und die Rückseite von der von der zweiten Schale wegweisenden Seite der ersten Schale gebildet ist.

Ferner kann ein Optikelement für eine auf den Kopf eines Benutzers aufsetzbare und ein Bild erzeugende Anzeigevorrichtung, das eine Vorderseite und eine Rückseite, einen Einkoppelabschnitt und einen vom Einkoppelabschnitt beabstandeten Auskoppelabschnitt und einen Lichtführungskanal aufweist, der dazu geeignet ist, Lichtbündel von Pixeln des erzeugten Bildes, die über den Einkoppelabschnitt des Optikelementes in das Optikelement eingekoppelt sind, im Optikelement bis zum Auskoppelabschnitt zu führen, von dem sie aus dem Optikelement ausgekoppelt werden, bereitgestellt werden, wobei das Optikelement mehrere Teile aufweist, die mit einer der erfindungsgemäßen Zusammensetzung miteinander verbunden, vorzugsweise verklebt sind. Weiter ist das Optikelement bevorzugt ein Brillenglas.

Des weiteren wird eine Anzeigevorrichtung mit einer auf den Kopf eines Benutzers aufsetzbaren Haltevorrichtung, einem an der Haltevorrichtung befestigten Bilderzeugungsmodul, das ein Bild erzeugt, und einer an der Haltevorrichtung befestigten Abbildungsoptik bereitgestellt, die ein erfindungsgemäßes Optikelement aufweist und die das erzeugte Bild im auf dem Kopf des Benutzers aufgesetzten Zustand der Haltevorrichtung so abbildet, dass es der Benutzer als virtuelles Bild wahrnehmen kann.

Die Abbildungsoptik kann das Optikelement als einziges optisches Element aufweisen. Es ist jedoch auch möglich, dass die Abbildungsoptik neben dem Optikelement noch zumindest ein weiteres optisches Element umfasst.

Die Anzeigevorrichtung kann eine Steuereinheit aufweisen, die das Bilderzeugungsmodul ansteuert.

Das Bilderzeugungsmodul kann insbesondere einen flächigen Bildgeber aufweisen, wie z. B. ein LCD-Modul, ein LCoS-Modul, ein OLED-Modul oder eine Kippspiegelmatrix. Der Bildgeber kann eine Mehrzahl von Pixeln aufweisen, die z. B. in Zeilen und Spalten angeordnet sein können. Der Bildgeber kann selbstleuchtend oder nicht selbstleuchtend sein.

Das Bilderzeugungsmodul kann insbesondere so ausgebildet sein, dass es ein monochromatisches oder ein mehrfarbiges Bild erzeugt.

Die erfindungsgemäße Anzeigevorrichtung kann weitere, dem Fachmann bekannte Elemente aufweisen, die zu ihrem Betrieb notwendig sind.

Ferner wird ein Verfahren zur Herstellung der beschriebenen Anzeigevorrichtung bereitgestellt. Dabei wird das erfindungsgemäße Optikelement gemäß dem erfindungsgemäßen Herstellungsverfahren hergestellt und das so hergestellte erfindungsgemäße Optikelement wird mit den weiteren Elementen der Anzeigevorrichtung so kombiniert (oder zusammengebaut), dass die erfindungsgemäße Anzeigevorrichtung (einschließlich ihrer Weiterbildungen) hergestellt ist.

Es versteht sich, dass die vorstehend genannten und die nachstehend noch zu erläuternden Merkmale nicht nur in den angegebenen Kombinationen, sondern auch in anderen Kombinationen oder in Alleinstellung einsetzbar sind, ohne den Rahmen der vorliegenden Erfindung zu verlassen.

Nachfolgend wird die Erfindung beispielsweise anhand der beigefügten Zeichnungen, die auch erfindungswesentliche Merkmale offenbaren, noch näher erläutert. Zur besseren Anschaulichkeit wird in den Figuren zumindest teilweise auf eine maßstabs- und proportionsgetreue Darstellung und auf Schraffuren verzichtet. Es zeigen:
- Fig. 1: eine Ausführungsform der erfindungsgemäßen Anzeigevorrichtung;
- Fig. 2: eine vergrößerte Teilschnittansicht des erfindungsgemäßen Optikelementes 1 einschließlich einer schematischen Darstellung des Bilderzeugungsmoduls;
- Fig. 3 - 7: Teilschnittansichten zur Erläuterung der Herstellung des erfindungsgemäßen Optikelementes, und
- Fig. 8: eine Teilschnittansicht zur Erläuterung einer alternativen Art der Herstellung des erfindungsgemäßen Optikelementes.

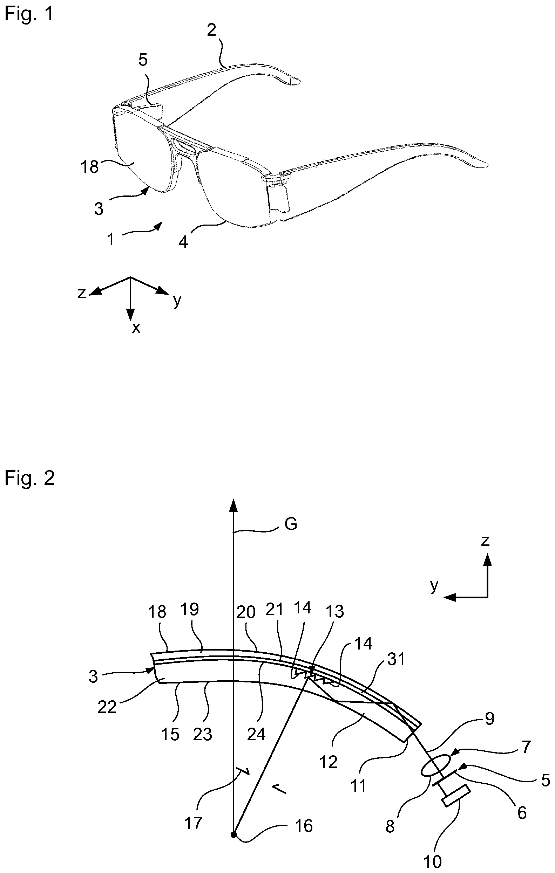

Bei der in Fig. 1 gezeigten Ausführungsform umfasst die erfindungsgemäße Anzeigevorrichtung 1 eine auf den Kopf eines Benutzers aufsetzbare Haltevorrichtung 2, die z. B. in Art eines herkömmlichen Brillengestells ausgebildet sein kann, sowie ein erstes und ein zweites Brillenglas 3, 4, die an der Haltevorrichtung 2 befestigt sind. Die Haltevorrichtung 2 mit den Brillengläsern 3, 4 kann z. B. als Sportbrille, Sonnenbrille und/oder Brille zur Korrektur einer Fehlsichtigkeit ausgebildet sein, wobei dem Benutzer über das erste Brillenglas 3 ein virtuelles Bild in sein Gesichtsfeld eingespiegelt werden kann, wie nachfolgend beschrieben wird.

Dazu umfasst die Anzeigevorrichtung 1 ein Bilderzeugungsmodul 5, das im Bereich des rechten Brillenbügels der Haltevorrichtung 2 angeordnet sein kann, wie in Fig. 1 schematisch dargestellt ist. Das Bilderzeugungsmodul 5 kann ein flächiges Bilderzeugungselement 6 (Fig. 2), wie z. B. einen OLED-, einen LCD- oder einen LCoS-Chip oder eine Kippspiegelmatrix, mit einer Vielzahl von z. B. in Spalten und Zeilen angeordneten Pixeln aufweisen.

Die Brillengläser 3 und 4 und insbesondere das erste Brillenglas 3 sind nur beispielshalber zusammen mit der erfindungsgemäßen Anzeigevorrichtung 1 beschrieben. Die Brillengläser 3, 4 bzw. zumindest das erste Brillenglas 3 sind jeweils für sich als erfindungsgemäßes Brillenglas 3, 4 oder als erfindungsgemäßes optisches Element ausgebildet. Das erfindungsgemäße optische Element kann auch in anderem Zusammenhang als mit der hier beschriebenen Anzeigevorrichtung 1 eingesetzt werden. Daher kann das optische Element, wenn es als Brillenglas ausgebildet ist, natürlich auch als zweites Brillenglas 4 ausgebildet sein.

Wie am besten aus der vergrößerten, schematischen Teilschnittansicht in Fig. 2 ersichtlich ist, weist die Anzeigevorrichtung 1 eine Abbildungsoptik 7 auf, die ein zwischen dem Bilderzeugungselement 6 bzw. dem Bildgeber 6 und dem ersten Brillenglas 3 angeordnetes Optikelement 8 enthält. Des Weiteren dient das erste Brillenglas 3 selbst auch als Teil der Abbildungsoptik 7.

Von jedem Pixel des Bildgebers 6 kann ein Lichtbündel 9 ausgehen. Durch eine entsprechende Ansteuerung der Pixel des Bildgebers 6 mittels einer Steuereinheit 10, die Teil des Bilderzeugungsmoduls 5 sein kann, kann das gewünschte Bild erzeugt werden. In Fig. 2 ist stellvertretend für die Lichtbündel 9 der Strahlengang eines Lichtstrahls eingezeichnet, so dass nachfolgend auch von dem Lichtstrahl 9 die Rede ist.

Der vom Bildgeber 6 ausgehende Lichtstrahl 9 läuft durch das Optikelement 8 und tritt über einen Einkoppelabschnitt 11 (hier die Stirnseite des ersten Brillenglases 3) in das erste Brillenglas 3 ein und wird in diesem entlang eines Lichtführungskanals 12 bis zu einem Auskoppelabschnitt 13 geführt. Der Auskoppelabschnitt 13 weist mehrere nebeneinander angeordnete reflektive Umlenkflächen 14 (die auch als reflektive Facetten bezeichnet werden können) auf, an denen eine Reflexion der Lichtstrahlen 9 in Richtung zu einer Rückseite 15 des ersten Brillenglases 3 stattfindet, so dass die Lichtstrahlen 9 über die Rückseite 15 aus dem ersten Brillenglas 3 austreten.

Somit kann ein Benutzer, wenn er die erfindungsgemäße Anzeigevorrichtung 1 bestimmungsgemäß auf dem Kopf trägt, das mittels des Bildgebers 6 erzeugte Bild als virtuelles Bild wahrnehmen, wenn er auf den Auskoppelabschnitt 13 blickt. Bei der hier beschriebenen Ausführungsform muss der Benutzer bezogen auf die Blickrichtung G eines Geradeausblicks um ca. 40° nach rechts schauen. In Fig. 2 ist zur Verdeutlichung der Drehpunkt 16 des Auges des Benutzers sowie die Eyebox 17 bzw. die Austrittspupille 17 der Abbildungsoptik 7 eingezeichnet. Die Eyebox 17 ist der Bereich, der durch die Anzeigevorrichtung 1 bereitgestellt wird und in dem sich das Auge des Benutzers bewegen kann und er stets noch das erzeugte Bild als virtuelles Bild sehen kann.

Obwohl bei der beschriebenen Ausführungsform die Einkopplung über die Stirnseite des ersten Brillenglases 3 durchgeführt ist und somit der Einkoppelabschnitt 11 auf der Stirnseite des ersten Brillenglases 3 ausgebildet ist, ist es auch möglich, eine Einkopplung über die Rückseite 15 des ersten Brillenglases durchzuführen.

Wie in der schematischen Darstellung in Fig. 2 gezeigt ist, ist sowohl die Rückseite 15 als auch die Vorderseite 18 des ersten Brillenglases 3 gekrümmt ausgebildet.

Das erste Brillenglas 3 ist ferner, wie insbesondere den Darstellungen in Fig. 2 zu entnehmen ist, zweischalig ausgebildet und umfasst eine Außenschale 19 mit einer ersten und zweiten Seite 20 und 21 sowie eine Innenschale 22 mit einer ersten und zweiten Seite 23 und 24.

Die erste Seite 20 der Außenschale 19 bildet die Vorderseite 18 des ersten Brillenglases 3 und die erste Seite 23 der Innenschale 22 bildet die Rückseite 15 des ersten Brillenglases 3. Die zweite Seite 21 der Außenschale 18 sowie die zweite Seite 24 der Innenschale 22, die einander zugewandt sind, weisen komplementäre Krümmungen auf und sind flächig über eine Kleberschicht 31 miteinander verbunden. Zur Ausbildung der Kleberschicht 31 kann die erfindungsgemäße Zusammensetzung als Klebstoff zum Verkleben der beiden Schalen 19, 22 verwendet werden.

Der Lichtführungskanal 12 ist so ausgebildet, dass die gewünschte Führung der Lichtstrahlen 9 vom Einkoppelabschnitt 11 bis zum Auskoppelabschnitt 13 erfolgt. Dies kann z. B. durch innere Totalreflexion an der Vorderseite 18 (= erste Seite 20 der Außenschale 19) und der Rückseite 15 (= erste Seite 23 der Innenschale 22) erfolgen. Natürlich ist es auch möglich, dass auf der Vorderseite 18 und/oder auf der Rückseite 15 im Bereich des Lichtführungskanals 12 eine reflektive Beschichtung ausgebildet ist, die die gewünschte Reflexion der Lichtstrahlen 9 bewirkt. Die Reflektivität der reflektiven Beschichtung kann z. B. so groß wie möglich (ca. 100 %) oder geringer sein. Die reflektive Beschichtung kann somit als Spiegelschicht oder als teilreflektive Schicht ausgebildet sein.

Bei der hier beschriebenen Ausführungsform sind die beiden Seiten 20, 21 der Außenschale 19 sphärisch gekrümmt und weist die erste Seite 20 der Außenschale 19 einen Krümmungsradius von 94 mm und weist die zweite Seite 21 der Außenschale 19 einen Krümmungsradius von 92 mm auf. Somit beträgt die Dicke der Außenschale 2 mm. Die Außenschale 19 kann aber auch mit einer geringen Dicke ausgebildet sein. So kann die Dicke der Außenschale 19 im Bereich von 0,15 mm bis kleiner als 2 mm liegen. Insbesondere kann die Außenschale 19 als formstabile Folie ausgebildet sein. Unter formstabil wird hier insbesondere verstanden, dass die Folie zumindest der Schwerkraft widersteht und somit ihre Form beibehält, wenn keine anderen Kräfte auf sie einwirken.

Die zweite Seite 24 der Innenschale 22 ist sphärisch gekrümmt und weist einen Krümmungsradius auf, der dem Radius der zweiten Seite 21 der Außenschale 19 entspricht. Dies ist hier also ein Radius von 92 mm. Die erste Seite 23 der Innenschale 22 ist sphärisch gekrümmt und weist den zur Korrektur der Fehlsichtigkeit des Benutzers erforderlichen Krümmungsradius auf (z. B. 150 mm bei der Verwendung von PMMA als Material für die Innenschale 22). Natürlich kann die erste Seite 23 der Innenschale auch asphärisch gekrümmt sein. Bevorzugt ist das Material der Außenschale 19 das gleiche wie das Material der Innenschale 22. Die Dicke der Innenschale 22 hängt im Wesentlichen vom Unterschied zwischen dem Radius der zweiten Seite 24 der Innenschale 22 und der ersten Seite 23 der Innenschale 22 ab und beträgt in dem hier beschriebenen Beispiel ca. 3 mm.

Wie bereits erwähnt, sind die Materialien der Innen- und Außenschale 22 und 19 bevorzugt gleich, so dass sie einen identischen Brechungsindex aufweisen. Die Innen- und Außenschale 22 und 19 sind bevorzugt ganzflächig über die Kleberschicht 31 verklebt, so dass ein kompaktes erstes Brillenglas 3 bereitgestellt ist.

Das erste Brillenglas 3 der hier beschriebenen Ausführungsform stellt eine Korrektur von + 2 Dioptrien bereit.

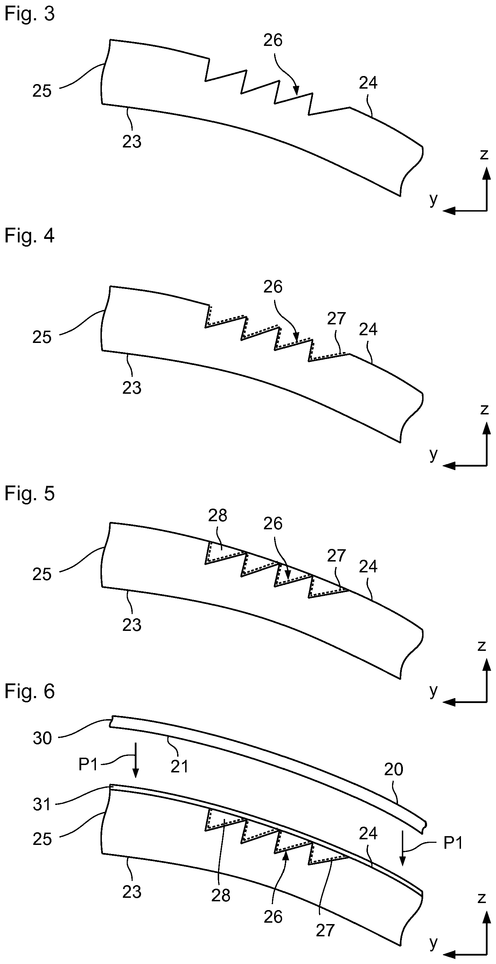

Das erfindungsgemäße optische Element kann wie folgt hergestellt werden:
In einem ersten Schritt wird ein erstes Halbzeug 25 im Spritzguss aus einem thermoplastischen Polymer hergestellt. Wie in der vergrößerten Teilschnittansicht von Fig. 3 gezeigt ist, weist das erste Halbzeug 25 die erste Seite 23 und die zweite Seite 24 auf. An der zweiten Seite 24 ist eine Mikrostrukturierung 26 ausgebildet, die die Form der gewünschten reflektiven Facetten 14 vorgibt.

Das erste Halbzeug 25 wird dann im Bereich der Mikrostrukturierung 26 mit einer optisch wirksamen Schicht 27 beschichtet, die mit gestrichelte Linie dargestellt ist (zur Vereinfachung der Darstellung ist die Schicht 27 in Fig. 2 nicht eingezeichnet). Dazu können bekannte Beschichtungsverfahren verwendet werden, wie z. B. ein chemisches Abscheiden aus der Gasphase (CVD) oder ein physikalisches Abscheiden aus der Gasphase (PVD). Die optisch wirksame Schicht 27, die in Fig. 4 gestrichelt dargestellt ist, ist so gewählt, dass die beschriebenen relativen Facetten 14 bereitgestellt sind.

Die aufgrund der Mikrostrukturierung 26 vorhandenen Vertiefungen, die sich von der zweiten Seite 24 in das Halbzeug 25 hinein erstrecken, werden in einem nachfolgenden Schritt so aufgefüllt, dass sich eine glatte durchgehende zweite Seite 24 ergibt (Fig. 5). Zum Auffüllen der Vertiefungen kann das gleiche Material 28 wie das Material zur Herstellung des Halbzeuges 25 oder auch ein optischer Kitt oder optischer Klebstoff 28 verwendet werden. Insbesondere kann die erfindungsgemäße Zusammensetzung verwendet werden.

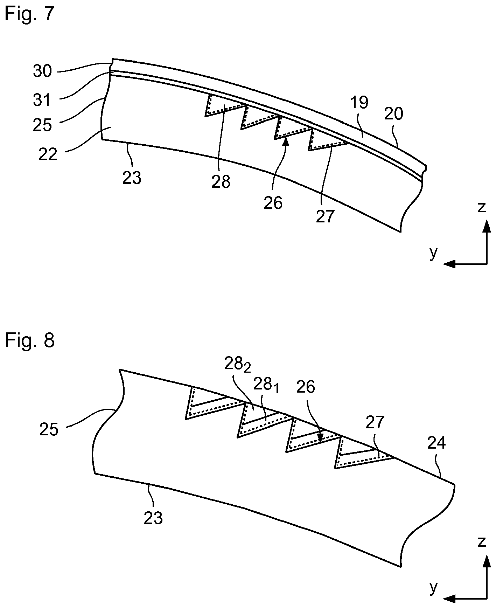

Danach wird die Außenschale 19 als zweites Halbzeug 30 im Spritzguss aus einem thermoplastischen Polymer so hergestellt, dass es die erste und zweite Seite 20, 21 aufweist. Das zweite Halbzeug 30 kann alternativ vor der Herstellung des ersten Halbzeuges 25 oder gleichzeitig mit dem ersten Halbzeug 25 hergestellt werden. Dieses zweite Halbzeug 28 wird dann ganzflächig mit dem ersten Halbzeug 25 verklebt. Dazu kann die zweite Seite 21 des zweiten Halbzeugs 30 und/oder die zweite Seite 24 des ersten Halbzeugs 25 mit einem optischen Kleber oder einem optischen Kitt beschichtet werden, um eine Kleberschicht 31 zu bilden. In Fig. 6 ist der Fall gezeigt, bei dem die zweite Seite 24 des ersten Halbzeugs 25 mit der Kleberschicht 31 beschichtet ist. Dann werden die beiden Halbzeuge an ihren Flächen 21 und 24 über die Kleberschicht 31, die auch als Klebstoffschicht bezeichnet werden kann, miteinander in Kontakt gebracht, wie durch die Pfeile P1 in Fig. 6 angedeutet ist und die Kleberschicht 31 wird ausgehärtet, um so das erfindungsgemäße optische Element 3 herzustellen, wie es in Fig. 7 gezeigt ist. Somit liegt das erfindungsgemäße optische Element 3 vor, das zweischalig aufgebaut ist, wobei die Außenseiten 23 und 20 der beiden Schalen 19 und 22 die Rückseite 15 und die Vorderseite 18 des ersten Brillenglases 3 bilden.

Als Material für die beiden Halbzeuge 25 und 30 können unterschiedliche Materialen verwendet werden. Bevorzugt wird jedoch für beide Halbzeuge 25 und 30 das gleiche Material verwendet. Insbesondere werden thermoplastische Polymere und/oder duroplastische Polymere verwendet.

Als thermoplastische Polymere können z. B. PMMA (Polymethylmethacrylat, z. B. Plexiglas), PA (Polyamide, z. B. Trogamid CX), COP (Cycloolefin-Polymere, z. B. Zeonex), PC (Polycarbonat, Poly(bisphenol-A-carbonat), z. B. Makrolon), LSR (Liquid Silicone Rubber, z. B. Silopren, Elastosil), PSU (Polysulfon, z. B. Ultrason), PES (Polyethersulfon) und/oder PAS (Polyarylensulfon) verwendet werden. Als duroplastische Polymere können z. B. ADC (Allyl-Diglykolcarbonat, z. B. CR-39), Acrylate (z. B. Spectralite), PUR (Polyurethane, z. B. RAVolution), PU/PUR (Polyharnstoffe, Polyurethane, z. B. Trivex), PTU (Polythiourethane, z. B. MR-8, MR-7) und/oder Polymere auf Episulfid/Polythiol-Basis (z. B. MR-174) verwendet werden.

In Fig. 8 ist in einer vergrößerten Schnittdarstellung das erste Halbzeug 25 mit der Mikrostrukturierung 26 und der optisch wirksamen Schicht 27 gezeigt. Im Unterschied zu dem bisher beschriebenen Auffüllen der Mikrostrukturierung 26 in einem Schritt wird dies bei der Variante gemäß Fig. 8 in zwei Schritten durchgeführt. Damit kann ein unerwünschter Schrumpf, der beim Aushärten des Materials der Auffüllschichten 28₁, 28₂ auftreten kann (Auffüllschicht 28₁ und danach Auffüllschicht 28₂), vermindert werden. Natürlich kann die Auffüllung auch in mehr als zwei Schritten, z. B. in drei, vier, fünf, sechs Schritten durchgeführt werden.

Bei der erfindungsgemäßen Anzeigevorrichtung 1 erfolgt die Einspiegelung des virtuellen Bildes in das Gesichtsfeld des Benutzers über das erste Brillenglas 3. Natürlich ist auch eine Einspiegelung über das zweite Brillenglas 4 möglich. Des Weiteren kann die Anzeigevorrichtung 1 so ausgebildet sein, dass Informationen bzw. virtuelle Bilder über beide Brillengläser 3, 4 eingespiegelt werden. Dabei kann die Einspiegelung so erfolgen, dass ein dreidimensionaler Bildeindruck entsteht. Dies ist jedoch nicht zwingend notwendig.

Die Brillengläser 3, 4 können eine Brechkraft von Null oder eine von Null verschiedene Brechkraft (insbesondere zur Korrektur von Fehlsichtigkeiten) aufweisen. Wie in den Figuren gezeigt ist, sind sowohl die Vorderseite 11 als auch die Rückseite 12 des Brillenglases 3 gekrümmt ausgebildet. Die Vorderseite 11 kann insbesondere sphärisch gekrümmt sein. Wenn das Brillenglas eine von Null verschiedene Brechkraft aufweist, um eine Fehlsichtigkeit zu korrigieren, ist in der Regel die Krümmung der Rückseite 15 entsprechend gewählt, um die entsprechende Korrektur zu erreichen. Die Rückseite 15 kann eine von der sphärischen Form abweichende Krümmung aufweisen.

Die Haltevorrichtung 2 muss nicht als brillenartige Haltevorrichtung ausgebildet sein. Es ist auch jede andere Art der Haltevorrichtung möglich, mit der ein Aufsetzen oder Tragen der Anzeigevorrichtung auf dem Kopf des Benutzers erfolgen kann.

Bei den beschriebenen Ausführungsbeispielen ist das Brillenglas 3 zweischalig ausgebildet. Es ist jedoch auch möglich, das Brillenglas mit mehr als zwei Schalen, z.B. zumindest drei Schalen, herzustellen. Insbesondere kann das Brillenglas aus zwei Teilen (die nicht notwendigerweise Schalen sein müssen) oder aus mehr als zwei Teilen herzustellen. Die Schalen bzw. Teile werden dann bevorzugt mit der erfindungsgemäßen Zusammensetzung verklebt.

Die nachfolgenden Beispiele erläutern die Erfindung.

Die nachfolgend aufgeführten Zusammensetzungen wurden hergestellt durch Mischen der Komponenten in der angegebenen Reihenfolge des Harzes und durch davon getrenntes Herstellen des Härters durch Mischen der Komponenten in der genannten Reihenfolge des Härters sowie der nachfolgenden Vermischung von Harz und Härter im angegebenen Verhältnis. Soweit angegeben erfolgte das Vermischen von Harz und Härter in Doppelkartuschen, wie sie in der Klebstofftechnik üblich sind, bei denen Harz und Härter durch Hindurchdrücken durch eine Mischstrecke in Form einer Wendel (statisches Mischrohr) vermischt werden, wobei das Verhältnis x + y, beispielsweise 2 + 1, das Gewichtsverhältnis von Harz zu Härter angibt.

Mit den nachfolgend beschriebenen Klebstoffen ließen sich ausreichend lange Verarbeitungszeiten von etwa 60 - 120 Min. bei einer vollständigen Durchhärtung innerhalb von etwa 4 - 6 Stunden (bei Raumtemperatur) erreichen und es wurden hervorragende Haftfestigkeiten erzielt. Mit den beschriebenen Einbettmedien ließen sich hervorragende Bildqualitäten bei der mikroskopischen Untersuchung von Gewebeschnitten erreichen.

### 1. Klebstoffe: Konstruktionsklebstoffe, Fassungsklebstoffe

### Beispiel 1:

| | |
|---|---|
| Harz: | 100 Gew.Teile Araldit F |
| | 3 Gew.Teile Glymo |
| | 0,02 Gew.Teile Seripas Red |
| | |
| | |
| Härter: | 100 Gew.Teile Präpolymer PTMP/XDI (100+10 Gew.Teile) |
| | 3 Gew.Teile 1-(2-Hydroxyethyl)pyrrolidin als Aminbase |
| | |
| Ansatz: | 100 Gew.Teile Harz + 80 Gew.Teile Härter |

### Beispiel 2:

| | |
|---|---|
| Harz: | 75 Gew.Teile Araldit F |
| | 20 Gew.Teile Harz Kleber 52A farblos (elastifiziertes Epoxidharz) |
| | 5 Gew.Teile Glycerintribenzoat |
| | 3 Gew.Teile Glymo |
| | 0,02 Gew.Teile Seripas Red |
| | |
| | |
| Härter: | 40 Gew.Teile Präpolymer PTMP/XDI (100+10 Gew.Teile) |
| | 60 Gew.Teile PTMP |
| | 5 Gew.Teile 1-Ethylpiperazin als Aminbase |

Geeignet für die Applikation in 2+1 - Doppelkartuschen

### Beispiel 3 (nicht erfindungsgemäß):

| | |
|---|---|
| Harz: | 50 Gew.Teile Araldit F |
| | 50 Gew.Teile Nanopox F 440 |
| | 3 Gew.Teile Glycerintribenzoat |
| | 3 Gew.Teile Glymo |
| | 0,02 Gew.Teile Seripas Red |
| | |
| | |
| Härter: | 100 Gew.Teile PTMP |
| | 0,35 Gew.Teile DABCO als Aminbase |

Geeignet für die Applikation in 2+1 - Doppelkartuschen

### Beispiel 4:

| | |
|---|---|
| Harz: | 100 Gew.Teile Araldit F |
| | 3 Gew.Teile Glymo |
| | 0,02 Gew.Teile Sudanblau |
| | 50 Gew.Teile Silbond FW 12 EST (Quarzgutmehl, silanisiert) |
| | |
| | |
| Härter: | 100 Gew.Teile Präpolymer PTMP/XDI (100+10 Gew.Teile) |
| | 0,5 Gew.Teile DABCO als Aminbase |
| | |
| Ansatz: | 100 Gew.Teile Harz + 55 Gew.Teile Härter |

### Beispiel 5 (nicht erfindungsgemäß):

| | |
|---|---|
| Harz: | 100 Gew.Teile Epalloy 5000 |
| | 3 Gew.Teile Glymo |
| | 0,02 Gew.Teile Sudanblau |
| | |
| | |
| Härter: | 100 Gew.Teile PTMP |
| | 0,5 Gew.Teile DABCO als Aminbase |

Geeignet für die Applikation in 2+1 - Doppelkartuschen

### Beispiel 6:

| | |
|---|---|
| Harz: | 30 Gew.Teile Rütapox 0158 |
| | 30 Gew.Teile Rütapox 0162 |
| | 40 Gew.Teile 1,4-Butandioldiglycidether |
| | 3 Gew.Teile Glymo |
| | 0,02 Gew.Teile Sudanblau |
| | |
| | |
| Härter: | 100 Gew.Teile Präpolymer PTMP/XDI (100+10 Gew.Teile) |
| | 0,1 Gew.Teile DBU als Aminbase |

Geeignet für die Applikation in 1+1 - Doppelkartuschen

### Beispiel 7:

| | |
|---|---|
| Harz: | 50 Gew.Teile Rütapox 0158 |
| | 50 Gew.Teile Rütapox 0162 |
| | 3 Gew.Teile Glymo |
| | 0,02 Gew.Teile Sudanblau |
| | |
| | |
| Härter: | 70 Gew.Teile Präpolymer PTMP/XDI (100+10 Gew.Teile) |
| | 30 Gew.Teile Thioplast G44 |
| | 0,25 Gew.Teile DABCO als Aminbase |

Geeignet für die Applikation in 1+1 - Doppelkartuschen

### Beispiel 8 (nicht erfindungsgemäß):

| | |
|---|---|
| Harz: | 20 Gew.Teile Araldit F |
| | 60 Gew.Teile Nanopox F440 |
| | 20 Gew.Teile IPOX CL 16 |
| | 0,02 Gew.Teile Sudanblau |
| | |
| | |
| Härter: | 100 Gew.Teile PTMP |
| | 4 Gew.Teile MTMO (3-Mercaptopropyl-trimethoxysilan) |
| | 0,3 Gew.Teile DABCO als Aminbase |

Geeignet für die Applikation in 2+1 - Doppelkartuschen

### 2. Klebstoffe mit optischen Eigenschaften: Feinkitte, Einbettmedien für die Mikroskopie

### Beispiel 9 (nicht erfindungsgemäß):

| | |
|---|---|
| Harz: | 60 Gew.Teile Rütapox 0158 |
| | 40 Gew.Teile Rütapox 0162 |
| | 2 Gew.Teile Glymo, destilliert |
| | |
| | |
| Härter: | 100 Gew.Teile PTMP |
| | 0,12 Gew.Teile DABCO als Aminbase |
| | |
| | |
| Ansatz: | 100 Gew.Teile Harz + 70 Gew.Teile Härter |

Brechwert (ausgehärtet) bei 20°C: ne = 1,596

### Beispiel 10 (nicht erfindungsgemäß):

| | |
|---|---|
| Harz: | 35 Gew.Teile Rütapox 0158 |
| | 25 Gew.Teile Rütapox 0162 |
| | 40 Gew.Teile 1,4-Butandioldiglycidether, destilliert |
| | 2 Gew.Teile Glymo, destilliert |
| | |
| | |
| Härter: | 100 Gew.Teile PTMP |
| | 0,25 Gew.Teile DABCO (Aminbase) |
| | |
| | |
| Ansatz: | 100 Gew.Teile Harz + 85 Gew.Teile Härter |

Brechwert (ausgehärtet) bei 20°C: ne = 1,571

### Beispiel 11:

| | |
|---|---|
| Harz: | 40 Gew.Teile Epalloy 5000, destilliert |
| | 60 Gew.Teile Erisys GE 22, destilliert |
| | 3 Gew.Teile Glymo, destilliert |
| | |
| | |
| Härter: | 100 Gew.Teile Präpolymer TPMP/XDI (100+5,6 Gew.Teile) |
| | 4 Gew.Teile 1-(2-Hydroxyethyl)-piperazin, destilliert als Aminbase |
| | |
| | |
| Ansatz: | 100 Gew.Teile Harz + 90 Gew.Teile Härter |

Brechwert (ausgehärtet) bei 20°C: ne = 1,540

### Beispiel 12 (nicht erfindungsgemäß):

| | |
|---|---|
| Harz: | 60 Gew.Teile Rütapox 0158 |
| | 40 Gew.Teile Rütapox 0162 |
| | 2 Gew.Teile Glymo, destilliert |
| | |
| | |
| Härter: | 50 Gew.Teile PTMP |
| | 50 Gew.Teile TEMPIC |
| | 0,2 Gew.Teile DABCO als Aminbase |
| | |
| | |
| Ansatz: | 100 Gew.Teile Harz + 85 Gew.Teile Härter |

Brechwert (ausgehärtet) bei 20°C: ne = 1,592

### Beispiel 13 (nicht erfindungsgemäß):

| | |
|---|---|
| Harz: | 62 Gew.Teile Rütapox 0158 |
| | 38 Gew.Teile Rütapox 0162 |
| | 2 Gew.Teile Glymo, destilliert |
| | |
| | |
| Härter: | 100 Gew.Teile MR7 B |
| | 0,12 Gew.Teile DABCO als Aminbase |
| | |
| | |
| Ansatz: | 100 Gew.Teile Harz + 50 Gew.Teile Härter |

Brechwert (ausgehärtet) bei 20°C: ne = 1,637

### 3. UV-aktivierbare Klebstoffsysteme:

Die UV-Aktivierung erfolgt durch Bestrahlung mit einer Quecksilberhochdrucklampe bzw. mit einer UV-LED bei vorzugsweise 365nm. Bestrahlungsleistung ca. 80 -120 mW/cm² für 30 bis 120 Sekunden. Bei der UV-Aktivierung erfolgt ein rascher Farbumschlag des angemischten Klebstoffs von blau nach gelb (Farbindikator für die UV-Aktivierung).

### Beispiel 14:

| | |
|---|---|
| Harz: | 100 Gew.Teile Araldit F |
| | 3 Gew.Teile Glymo |
| | 5 Gew.Teile Darocur 1173 (Radikalstarter) |
| | 0,02 Gew.Teile Sudanblau |
| | |
| Härter: | 100 Gew.Teile Präpolymer PTMP/XDI (100+10 Gew.Teile) |
| | 5 Gew.Teile Methoxycarbonylbenzyl-DBN als photolatente Aminbase |
| | 2 Gew.Teile 1-Ethylpiperazin als zusätzliche Aminbase |
| | |
| Ansatz: | 100 Gew.Teile Harz + 80 Gew.Teile Härter |

### Beispiel 15 (nicht erfindungsgemäß):

| | |
|---|---|
| Harz: | 40 Gew.Teile Araldit F |
| | 60 Gew.Teile Nanopox F440 |
| | 3 Gew.Teile Glymo |
| | 6 Gew.Teile Darocur 1173 (Radikalstarter) |
| | 0,02 Gew.Teile Sudanblau |
| | |
| Härter: | 80 Gew.Teile PTMP |
| | 20 Gew.Teile TEMPIC |
| | 5 Gew.Teile Methoxycarbonylbenzyl-DBN als photolatente Aminbase |

Geeignet für die Applikation in 2+1 - Doppelkartuschen

### Beispiel 16:

| | |
|---|---|
| Harz: | 30 Gew.Teile Epalloy 8330* |
| | 70 Gew.Teile Araldit F |
| | 8 Gew.Teile Darocur 1173 |
| | 5 Gew.Teile Glymo |
| | 0,02 Gew.Teile Sudanblau |
| | 35 Gew.Teile Silbond FW 12 EST |
| | 30 Gew.Teile Silbond FW 600 EST |
| | |
| *epoxidierter Phenolharz-Novolack, Hersteller CVC Specialty Chemicals | |
| Härter: | 100 Gew.Teile Präpolymer PTMP/XDI (100 + 12 Gew.Teile) |
| | 5 Gew.Teile PL-DBN** |
| | 0,1 Gew.Teile DABCO (Aminkatalysator) |
| | |
| ** PL-DBN = photolatente Aminbase DBN | |
| photoaktivierbar, geeignet für 2+1 - Doppelkartuschen | |

### 4. Feinkitt mit hoher Brechwertanpassung an Polycarbonat:

### Beispiel 17:

| | |
|---|---|
| Harz: | 90 Gew.Teile Araldit F |
| | 10 Gew.Teile Epalloy 5000 |
| | 3 Gew.Teile Glymo |
| | nₑ²¹= 1,5649, D₂₀ = 1,175 g/cm³ |
| | |
| Härter: | 90 Gew.Teile Präpolymer PTMP/XDI (100+10 Gew.Teile) |
| | 10 Gew.Teile Präpolymer MR7 B/XDI (100+20 Gew.Teile) |
| | 0,1 Gew.Teile DABCO (Aminkatalysator) |
| | nₑ²¹ = 1,5568, D₂₀ = 1,300 g/cm³ |
| | |
| Ansatz: | 100 Volumenteile Harz |
| | 60 Volumenteile Härter (Verarbeitung mit Mischanlage) |
| | Mischung nₑ²¹ = 1,5609 |
| | Topfzeit (2g) ca. 60 min |

ausgehärtet nₑ²¹ = 1,5912
Polycarbonat (LQ 2647) nₑ²¹ = 1,5912
Zielwellenlänge ist 546 nm (nₑ)

Messwerte der ausgehärteten Mischung nach Beispiel 16:
n_{g} (435,8 nm) = 1,6078
n_{F}^{'} (480,0 nm) = 1,5996
n (508,5 nm) = 1,5955
nₑ (546,1 nm) = 1,5910, nach weiteren 5 d/RT 1,5912 (Brechwert danach stabil)
n (578,0 nm) = 1,5880
n_{g} (589,3 nm) = 1,5870
nₑ (643,8 nm) = 1,5826
   (n_{F}'- n_{c}¹) = 0,0170
   ϑₑ = 34,8

Vergleich mit Makrolon (Polycarbonat; LQ 2647), Planplatte D = 80 mm, d = 2 mm
n_{g} (435,8 nm)= 1,6123
n_{F}' (480,0 nm) = 1,6017
n (508,5 nm) = 1,5966
nₑ (546,1 nm)= 1,5912
n (578,0 nm) = 1,5875
n_{D} (589,3 nm) = 1,5864
n_{c}' (643,8 nm) = 1,5819
   (n_{F}'- n_{c}¹)= 0,0198
   ϑₑ = 29,9

Die Feinkitte können zusätzlich noch Additive enthalten, z.B. gegen Vergilbung durch Einwirkung von Tageslicht/Sonnenlicht in Form von sogenannten UV-Absorbern, z.B. Tinuvin P, Tinuvin 109, Tinuvin 900 oder 2,4-Dihydroxybenzophenon.

## Patentansprüche

1. Zusammensetzung enthaltend
(A) eine Epoxidverbindung mit zwei oder mehr Epoxidgruppen,
(B) ein oligomeres Thiourethan, erhältlich durch Umsetzung mindestens eines Thiolesters, der zwei oder mehr Estergruppen und zwei oder mehr Thiolgruppen aufweist und/oder durch Umsetzung mindestens eines Thioethers, der zwei oder mehr Thiolgruppen aufweist, mit mindestens einem Di- oder Polyisocyanat, wobei das oligomere Thiourethan zwei oder mehr freie Thiolgruppen aufweist und
(C) 0,005 - 2 Gew.-%, bezogen auf das Gesamtgewicht der Zusammensetzung, eines tertiären Amins, das einen 5- oder 6-gliedrigen aliphatischen Stickstoff-Heterocyclus aufweist,
wobei die Zusammensetzung weniger als 1 Gew.-%, bezogen auf das Gesamtgewicht der Zusammensetzung, primäres Amin enthält.

2. Zusammensetzung nach Anspruch 1, **dadurch gekennzeichnet, dass** das tertiäre Amin ausgewählt ist aus der Gruppe 1-(2-Hydroxyethyl)-pyrrolidin, 1-(2-Hydroxyethyl)-pyrrolidon, 1-(2-Hydroxyethyl)-piperidin, 1-Ethylpiperazin, 1-(2-Hydroxyethyl)-piperazin, 1,4-Bis-(2-hydroxyethyl)-piperazin, 4-(2-Hydroxyethyl)-morpholin, 1,4-Diazabicyclo-[2.2.2]-octan (DABCO), 1,5- Diazabicyclo-[4.3.0]-non-5-en (DBN) und 1,8- Diazabicyclo-[5.4.0]-undec-7-en (DBU).

3. Zusammensetzung nach Anspruch 1 oder 2, **dadurch gekennzeichnet, dass** die Komponente (B) eine Mischung aus zwei oder mehr oligomeren Thiourethanen ist, wobei die oligomeren Thiourethane jeweils erhältlich sind durch Umsetzung mindestens eines Thiolesters, der zwei oder mehr Estergruppen und zwei oder mehr Thiolgruppen aufweist und/oder durch Umsetzung eines Thioethers, der zwei oder mehr Thiolgruppen aufweist, mit mindestens einem Di- oder Polyisocyanat, wobei jedes oligomere Thiourethan zwei oder mehr freie Thiolgruppen aufweist.

4. Zusammensetzung nach einem der Ansprüche 1 bis 3, **dadurch gekennzeichnet, dass** das Zahlenmittel der im oligomeren Thiourethan enthaltenen Monomere 5 - 25 beträgt und der Anteil des oligomeren Thiourethans oder der oligomeren Thiourethane, bezogen auf das Gesamtgewicht der Zusammensetzung, 10 - 50 Gew.-% beträgt.

5. Zusammensetzung nach einem der Ansprüche 1 - 4, **dadurch gekennzeichnet, dass** der Thiolester Pentaerythrol-tetra-(3-mercaptopropionat), Trimethylolpropan-tri-(3-mercaptopropionat), Ethylenglycol-di-(3-mercaptopropionat), Pentaerythrol-tetra-(mercaptoacetat), Trimethylolpropan-tri-(mercaptoacetat), Ethylenglycol-di-(mercaptoacetat), Tris-[2-(3-mercaptopropionyloxy)-ethyl]-isocyanurat, Tris-[2-(2-mercaptopropionyloxy)-ethyl]-isocyanurat oder eine Mischung daraus ist und/oder der Thioether 2,3-Bis(2-mercaptoethylsulfanyl)propan-1-thiol ist.

6. Zusammensetzung nach einem der Ansprüche 1 - 5, enthaltend
(A) Bisphenol-A-diglycidether und/oder Bisphenol-F-diglycidether,
(B) 10 - 50 Gew.-%, insbesondere 20 - 40 Gew.-%, bezogen auf das Gesamtgewicht der Zusammensetzung, eines Thiolesters in Form eines oder mehrerer oligomerer Thiourethane, jeweils erhältlich aus Pentaerythrol-tetra-(3-mercaptopropionat) (PTMP) und/oder Trimethylolpropan-tri-(3-mercaptopropionat) (TPMP) mit Xylylendiisocyanat (XDI), Norbornyldiisocyanat (NBDI) und/oder Isophorondiisocyanat (IPDI), wobei jedes oligomere Thiourethan zwei oder mehr freie Thiolgruppen aufweist, und
(C) 0,005 - 0,3 Gew.-%, bezogen auf das Gesamtgewicht der Zusammensetzung, ein oder mehrere tertiäre Amine, ausgewählt aus der Gruppe bestehend aus 1,5- Diazabicyclo-[4.3.0]-non-5-en (DBN), 1,8- Diazabicyclo-[5.4.0]-undec-7-en (DBU) und 1,4-Diazabicyclo-[2.2.2]-octan (DABCO) oder 0,3 - 2 Gew.-%, bezogen auf das Gesamtgewicht der Zusammensetzung, ein oder mehrere tertiäre Amine, ausgewählt aus der Gruppe bestehend aus 1-(2-Hydroxyethyl)-pyrrolidin, 1-(2-Hydroxyethyl)-pyrrolidon, 1-(2-Hydroxyethyl)-piperidin, 1-Ethylpiperazin, 1-(2-Hydroxyethyl)-piperazin, 1,4-Bis-(2-hydroxyethyl)-piperazin, und 4-(2-Hydroxyethyl)-morpholin,
wobei die Zusammensetzung weniger als 1 Gew.-% primäres Amin enthält.

7. Zusammensetzung nach einem der Ansprüche 1 - 6, **dadurch gekennzeichnet, dass** die Zusammensetzung zusätzlich
(E) 0,5 - 2 Gew.-% einer photolatenten Base, ausgewählt aus der Gruppe bestehend aus substituiertes 5-(Carbonylarylmethyl)-1,5-Diazabicyclo-[4.3.0]-nonan und gegebenenfalls substituiertes 8-(Carbonylarylmethyl)-1,8- Diazabicyclo-[5.4.0]-undecan und
(F) einen Photoinitiator enthält.

8. Verwendung einer Zusammensetzung nach einem der Ansprüche 1 - 7 als Klebstoff.

9. Verwendung nach Anspruch 8 als Feinkitt.

10. Verwendung einer Zusammensetzung nach einem der Ansprüche 1 - 7 als Einbettmedium für die Mikroskopie.

11. Optikelement für eine auf den Kopf eines Benutzers aufsetzbare und ein Bild erzeugende Anzeigevorrichtung (1), das
eine Vorderseite (18) und eine Rückseite (15),
einen Einkoppelabschnitt (11) und einen vom Einkoppelabschnitt (11) beabstandeten Auskoppelabschnitt (13) und
einen Lichtführungskanal (12) aufweist, der dazu geeignet ist, Lichtbündel (9) von Pixeln des erzeugten Bildes, die über den Einkoppelabschnitt (11) des Optikelementes (3) in das Optikelement (3) eingekoppelt sind, im Optikelement (3) bis zum Auskoppelabschnitt (13) zu führen, von dem sie aus dem Optikelement (3) ausgekoppelt werden,
wobei das Optikelement mehrere Teile (19, 22) aufweist, die
mit einer Zusammensetzung nach einem der Ansprüche 1 - 7 miteinander verbunden sind.

12. Anzeigevorrichtung mit
einer auf den Kopf eines Benutzers aufsetzbaren Haltevorrichtung (2),
einem an der Haltevorrichtung (2) befestigten Bilderzeugungsmodul (5), das ein Bild erzeugt, und
einer an der Haltevorrichtung (2) befestigten Abbildungsoptik (7), die ein Optikelement (3) nach Anspruch 11 aufweist und die das erzeugte Bild im auf dem Kopf des Benutzers aufgesetzten Zustand der Haltevorrichtung (2) so abbildet, dass es der Benutzer als virtuelles Bild wahrnehmen kann.

## Claims

1. Composition containing
(A) an epoxy compound with two or more epoxy groups,
(B) an oligomeric thiourethane which can be obtained by reacting at least one thiol ester which comprises two or more ester groups and two or more thiol groups and/or by reacting at least one thioether which comprises two or more thiol groups with at least one di- or polyisocyanate, wherein the oligomeric thiourethane comprises two or more free thiol groups, and
(C) 0.005 - 2 wt.-%, based on the total weight of the composition, of a tertiary amine which comprises a 5- or 6-membered aliphatic nitrogen heterocycle,
wherein the composition contains less than 1 wt.-%, based on the total weight of the composition, primary amine.

2. Composition according to claim 1, **characterized in that** the tertiary amine is selected from the group 1-(2-hydroxyethyl)pyrrolidine, 1-(2-hydroxyethyl)pyrrolidone, 1-(2-hydroxyethyl)piperidine, 1-ethylpiperazine, 1-(2-hydroxyethyl)piperazine, 1,4-bis-(2-hydroxyethyl)piperazine, 4-(2-hydroxyethyl)morpholine, 1,4-diazabicyclo[2.2.2]octane (DABCO), 1,5-diazabicyclo[4.3.0]non-5-ene (DBN) and 1,8-diazabicyclo[5.4.0]undec-7-ene (DBU).

3. Composition according to claim 1 or 2, **characterized in that** the component (B) is a mixture of two or more oligomeric thiourethanes, wherein the oligomeric thiourethanes in each case can be obtained by reacting at least one thiol ester which comprises two or more ester groups and two or more thiol groups and/or by reacting a thioether which comprises two or more thiol groups with at least one di- or polyisocyanate, wherein each oligomeric thiourethane comprises two or more free thiol groups.

4. Composition according to any of claims 1 - 3, **characterized in that** the number average of the monomers contained in the oligomeric thiourethane is 5 - 25 and the proportion of the oligomeric thiourethane or of the oligomeric thiourethanes, based on the total weight of the composition, is 10 - 50 wt.-%.

5. Composition according to any of claims 1 - 4, **characterized in that** the thiol ester is pentaerythritol tetra(3-mercaptopropionate), trimethylolpropane tri(3-mercaptopropionate), ethylene glycol di(3-mercaptopropionate), pentaerythritol tetra(mercaptoacetate), trimethylolpropane tri(mercaptoacetate), ethylene glycol di(mercaptoacetate), tris[2-(3-mercaptopropionyloxy)ethyl] isocyanurate, tris-[2-(2-mercaptopropionyloxy)ethyl] isocyanurate or a mixture thereof and/or the thioether is 2,3-bis(2-mercaptoethylsulfanyl)propane-1-thiol.

6. Composition according to any of claims 1 - 5, containing
(A) bisphenol A diglycidyl ether and/or bisphenol F diglycidyl ether,
(B) 10 - 50 wt.-%, in particular 20 - 40 wt.-%, based on the total weight of the composition, of a thiol ester in the form of one or more oligomeric thiourethanes, which can be obtained in each case from pentaerythritol tetra(3-mercaptopropionate) (PTMP) and/or trimethylolpropane tri(3-mercaptopropionate) (TPMP) with xylylene diisocyanate (XDI), norbornyl diisocyanate (NBDI) and/or isophorone diisocyanate (IPDI), wherein each oligomeric thiourethane comprises two or more free thiol groups, and
(C) 0.005 - 0.3 wt.-%, based on the total weight of the composition, one or more tertiary amines, selected from the group consisting of 1,5-diazabicyclo[4.3.0]non-5-ene (DBN), 1,8-diazabicyclo[5.4.0]undec-7-ene (DBU) and 1,4-diazabicyclo[2.2.2]octane (DABCO) or 0.3 - 2 wt.-%, based on the total weight of the composition, one or more tertiary amines, selected from the group consisting of 1-(2-hydroxyethyl)pyrrolidine, 1-(2-hydroxyethyl)pyrrolidone, 1-(2-hydroxyethyl)piperidine, 1-ethylpiperazine, 1-(2-hydroxyethyl)piperazine, 1,4-bis-(2-hydroxyethyl)piperazine, and 4-(2-hydroxyethyl)morpholine,
wherein the composition contains less than 1 wt.-% primary amine.

7. Composition according to one of claims 1 - 6, **characterized in that** the composition additionally contains
(E) 0.5 - 2 wt.-% of a photolatent base, selected from the group consisting of substituted 5-(carbonylarylmethyl)-1,5-diazabicyclo[4.3.0]nonane and optionally substituted 8-(carbonylarylmethyl)-1,8-diazabicyclo[5.4.0]undecane and
(F) a photoinitiator.

8. Use of a composition according to one of claims 1 - 7 as adhesive.

9. Use according to claim 8 as cement.

10. Use of a composition according to one of claims 1 - 7 as embedding medium for microscopy.

11. Optical element for a display device (1) that can be fitted on the head of a user and generates an image, that comprises
a front side (18) and a rear side (15),
a coupling-in section (11) and a coupling-out section (13) spaced apart from the coupling-in section (11) and
a light guiding channel (12) which is suitable for guiding light bundles (9) of pixels of the generated image, which are coupled into the optical element (3) via the coupling-in section (11) of the optical element (3), in the optical element (3) to the coupling-out section (13), by which they are coupled out of the optical element (3),
wherein the optical element comprises several parts (19, 22), which
are joined to each other with a composition according to any of claims 1 - 7.

12. Display device with
a holder (2) that can be fitted on the head of a user,
an image-generating module (5) secured to the holder (2), which generates an image, and
an imaging optical system (7) secured to the holder (2), which comprises an optical element (3) according to claim 11 and which, when the holder (2) is fitted on the user's head, images the generated image such that the user can perceive it as a virtual image.

## Revendications

1. Composition, contenant :
(A) un composé d'époxyde contenant deux groupes époxyde ou plus,
(B) un thiouréthane oligomère, pouvant être obtenu par mise en réaction d'au moins un ester de thiol, qui comprend deux groupes ester ou plus et deux groupes thiol ou plus, et/ou par mise en réaction d'au moins un thioéther, qui comprend deux groupes thiol ou plus, avec au moins un di- ou polyisocyanate, le thiouréthane oligomère comprenant deux groupes thiol libres ou plus, et
(C) 0,005 à 2 % en poids, par rapport au poids total de la composition, d'une amine tertiaire, qui comprend un hétérocycle azoté aliphatique à 5 ou 6 chaînons,
la composition contenant moins de 1 % en poids, par rapport au poids total de la composition, d'une amine primaire.

2. Composition selon la revendication 1, **caractérisée en ce que** l'amine tertiaire est choisie dans le groupe constitué par la 1-(2-hydroxyéthyl)-pyrrolidine, la 1-(2-hydroxyéthyl)-pyrrolidone, la 1-(2-hydroxyéthyl)-pipéridine, la 1-éthylpipérazine, la 1-(2-hydroxyéthyl)-pipérazine, la 1,4-bis-(2-hydroxyéthyl)-pipérazine, la 4-(2-hydroxyéthyl)-morpholine, le 1,4-diazabicyclo-[2.2.2]-octane (DABCO), le 1,5-diazabicyclo-[4.3.0]-non-5-ène (DBN) et le 1,8-diazabicyclo-[5.4.0]-undéc-7-ène (DBU) .

3. Composition selon la revendication 1 ou 2, **caractérisée en ce que** le composant (B) est un mélange de deux thiouréthanes oligomères ou plus, les thiouréthanes oligomères pouvant chacun être obtenus par mise en réaction d'au moins un ester de thiol, qui comprend deux groupes ester ou plus et deux groupes thiol ou plus, et/ou par mise en réaction d'un thioéther, qui comprend deux groupes thiol ou plus, avec au moins un di- ou polyisocyanate, chaque thiouréthane oligomère comprenant deux groupes thiol libres ou plus.

4. Composition selon l'une quelconque des revendications 1 à 3, **caractérisée en ce que** la moyenne en nombre des monomères contenus dans le thiouréthane oligomère est de 5 à 25, et la proportion du thiouréthane oligomère ou des thiouréthanes oligomères, par rapport au poids total de la composition, est de 10 à 50 % en poids.

5. Composition selon l'une quelconque des revendications 1 à 4, **caractérisée en ce que** l'ester de thiol est le tétra-(3-mercaptopropionate) de pentaérythrol, le tri-(3-mercaptopropionate) de triméthylolpropane, le di-(3-mercaptopropionate) d'éthylène glycol, le tétra-(mercaptoacétate) de pentaérythrol, le tri-(mercaptoacétate) de triméthylolpropane, le di-(mercaptoacétate) d'éthylène glycol, l'isocyanurate de tris-[2-(3-mercaptopropionyloxy)-éthyle], l'isocyanurate de tris-[2-(2-mercaptopropionyloxy)-éthyle] ou un mélange de ceux-ci et/ou le thioéther est le 2,3-bis(2-mercaptoéthylsulfanyl)propane-1-thiol.

6. Composition selon l'une quelconque des revendications 1 à 5, contenant :
(A) de l'éther diglycidylique de bisphénol A et/ou de l'éther diglycidylique de bisphénol F,
(B) 10 à 50 % en poids, notamment 20 à 40 % en poids, par rapport au poids total de la composition, d'un ester de thiol sous la forme d'un ou de plusieurs thiouréthanes oligomères, pouvant chacun être obtenus à partir de tétra-(3-mercaptopropionate) de pentaérythrol (PTMP) et/ou de tri-(3-mercaptopropionate) de triméthylolpropane (TPMP) avec du diisocyanate de xylylène (XDI), du diisocyanate de norbornyle (NBDI) et/ou du diisocyanate d'isophorone (IPDI), chaque thiouréthane oligomère comprenant deux groupes thiol libres ou plus, et
(C) 0,005 à 0,3 % en poids, par rapport au poids total de la composition, d'une ou de plusieurs amines tertiaires, choisies dans le groupe constitué par le 1,5-diazabicyclo-[4.3.0]-non-5-ène (DBN), le 1,8-diazabicyclo-[5.4.0]-undéc-7-ène (DBU) et le 1,4-diazabicyclo-[2.2.2]-octane (DABCO) ou 0,3 à 2 % en poids, par rapport au poids total de la composition, d'une ou de plusieurs amines tertiaires, choisies dans le groupe constitué par la 1-(2-hydroxyéthyl)-pyrrolidine, la 1-(2-hydroxyéthyl)-pyrrolidone, la 1-(2-hydroxyéthyl)-pipéridine, la 1-éthylpipérazine, la 1-(2-hydroxyéthyl)-pipérazine, la 1,4-bis-(2-hydroxyéthyl)-pipérazine et la 4-(2-hydroxyéthyl)-morpholine,
la composition contenant moins de 1 % en poids d'amine primaire.

7. Composition selon l'une quelconque des revendications 1 à 6, **caractérisée en ce que** la composition contient en outre
(E) 0,5 à 2 % en poids d'une base photolatente, choisie dans le groupe constitué par le 5-(carbonylarylméthyl)-1,5-diazabicyclo-[4.3.0]-nonane substitué et le 8-(carbonylarylméthyl)-1,8-diazabicyclo-[5.4.0]-undécane éventuellement substitué, et
(F) un photoinitiateur.

8. Utilisation d'une composition selon l'une quelconque des revendications 1 à 7 en tant qu'adhésif.

9. Utilisation selon la revendication 8 en tant que mastic fin.

10. Utilisation d'une composition selon l'une quelconque des revendications 1 à 7 en tant que milieu de montage pour microscopie.

11. Élément optique pour un dispositif d'affichage (1) pouvant être placé sur la tête d'un utilisateur et générant une image, qui comprend
un côté avant (18) et un côté arrière (15),
une section de couplage (11) et une section de découplage (13) espacée de la section de couplage (11), et
un canal de conduction de lumière (12), qui est approprié pour acheminer des faisceaux lumineux (9) de pixels de l'image générée, qui sont couplés par la section de couplage (11) de l'élément optique (3) dans l'élément optique (3), dans l'élément optique (3) jusqu'à la section de découplage (13), par laquelle ils sont découplés de l'élément optique (3),
l'élément optique comprenant plusieurs parties (19, 22), qui sont reliées les unes avec les autres avec une composition selon l'une quelconque des revendications 1 à 7.

12. Dispositif d'affichage comprenant
un support (2) pouvant être placé sur la tête d'un utilisateur,
un module de génération d'images (5), qui génère une image, fixé au support (2), et
une optique d'imagerie (7) fixée sur le support (2), qui comprend un élément optique (3) selon la revendication 11 et qui représente l'image générée à l'état placé sur la tête de l'utilisateur du support (2) de sorte que l'utilisateur puisse la percevoir sous la forme d'une image virtuelle.
